# EUROPEAN PATENT SPECIFICATION

(11) **EP 4 318 066 B1**
(45) Date of publication and mention of the grant of the patent: **30.07.2025**
(21) Application number: 22794269.5
(22) Date of filing: 14.02.2022
(51) Int. Cl.: G02B 6/293, G02B 6/35, H04Q 11/00

(54) **OPTICAL SWITCHING DEVICE, OPTICAL SWITCHING METHOD, OPTICAL SWITCHING NODE AND SYSTEM**
OPTISCHE SCHALTVORRICHTUNG, OPTISCHES SCHALTVERFAHREN, OPTISCHER SCHALTKNOTEN UND SYSTEM
DISPOSITIF DE COMMUTATION OPTIQUE, PROCÉDÉ DE COMMUTATION OPTIQUE, NOEUD DE COMMUTATION OPTIQUE ET SYSTÈME

(30) Priority: 30.04.2021 CN 202110485945
(43) Date of publication of application: 07.02.2024
(73) Proprietor: Huawei Technologies Co., Ltd., Longgang Shenzhen, Guangdong 518129 (CN)
(72) Inventor: ZHAO, Han, Shenzhen, Guangdong 518129 (CN); ZONG, Liangjia, Shenzhen, Guangdong 518129 (CN); CHANG, Zeshan, Shenzhen, Guangdong 518129 (CN)
(74) Representative: Goddar, Heinz J.
(86) International application number: PCT/CN2022/076155
(87) International publication number: WO 2022/227789

(56) References cited:
- WO-A1-2020/220718
- CN-A- 104 620 155
- CN-A- 105 408 798
- CN-A- 110 780 388
- CN-A- 112 152 750
- CN-B- 107 850 738
- US-A1- 2012 057 869
- US-A1- 2013 216 183

## Description

### TECHNICAL FIELD

This application relates to the field of optical fiber communication, and in particular, to an optical switching apparatus, an optical switching method, an optical switching node, and a system.

### BACKGROUND

In a current optical network, a transmission direction (or a transmission path) of an optical signal may be switched by using an optical switching node. The optical switching node may be a reconfigurable optical add drop multiplexer (reconfigurable optical add drop multiplexer, ROADM) or an optical switching node in a data center network.

In a current optical switching node, a plurality of wavelength selective switches (wavelength selective switch, WSS) are interconnected to establish the optical switching node, to implement transmission direction switching of different optical signals. However, for a single WSS, the WSS obtains input optical signals through a plurality of included input optical fibers, the WSS outputs optical signals through a plurality of included output optical fibers, and both the input optical fibers and the output optical fibers are arranged in one dimension along a target direction. It can be learned that, the WSS can implement transmission direction switching only in the target direction.

Because transmission direction switching of the optical signals can be implemented only in the target direction, a quantity of output ports of the output optical fibers of the WSS is limited. As a result, the current WSS cannot implement switching of the optical signals in more transmission directions.

US 2013/216183 A1 discloses a wavelength-selective cross-connect (WSXC) device having N input ports and M output ports and configured to route any set of one or more carrier wavelengths from a corresponding input port to any selected output port. In one embodiment, the WSXC device includes a diffraction grating and a beam-steering device optically coupled to each other and to the input/output ports so that each of the carrier wavelengths traverses the diffraction grating and the beam-steering device two or more times en route from the respective input port to a designated output port. Various unfolded configurations of the WSXC device are also disclosed.

WO 2020/220718 A1 discloses an optical communication device, which can be a reconfigurable optical add-drop multiplexer. An optical deflection component thereof is capable of deflecting at an angle multiple first sub-wavelength beams input via a first input component and dispersed by a first wavelength dispersion component so as to obtain multiple second sub-wavelength beams. The multiple second sub-wavelength beams are propagated to a second optical switch array, combined by a third wavelength dispersion component, and output in a dimension by a first output component. The optical deflection component is further capable of deflecting at an angle, the multiple first sub-wavelength beams to obtain multiple third sub-wavelength beams, and the third sub-wavelength beams are combined by a second wavelength dispersion component, are incident on a third optical switch array, and then output by a second output component in a wave-dropping manner, wherein the second sub-wavelength beams and the third sub-wavelength beams have different beam propagation directions.

### SUMMARY

The present invention provides an optical switching apparatus according to independent claim 1 and an optical switching method according to independent claim 9. Further embodiments are provided by the dependent claims.

According to a first aspect, an embodiment of the present invention provides an optical switching apparatus. The optical switching apparatus includes input ports, a first dispersion member, a first switching engine, a first beam combining member, a first lens group, a second dispersion member, a second beam combining member, a second switching engine, and output ports. The input ports are configured to obtain first light beams. The first dispersion member is configured to receive the first light beams from the input ports, and is configured to decompose the first light beams into a plurality of first sub-wavelength light beams, and the first dispersion member is further configured to make the plurality of first sub-wavelength light beams incident on the first switching engine. The first switching engine is configured to change transmission directions of the first sub-wavelength light beams for being incident on a plurality of first beam combining regions included in the first beam combining member. The first beam combining regions are configured to perform beam combining on the received first sub-wavelength light beams to form second light beams, and the first beam combining member is configured to make a plurality of second light beams incident on the first lens group. The first lens group is configured to converge the plurality of second light beams to the second dispersion member, where the first lens group includes an odd quantity of lenses. The second dispersion member is configured to decompose each second light beam into a plurality of second sub-wavelength light beams, and the second dispersion member is configured to make the plurality of second sub-wavelength light beams incident on the second switching engine. The second switching engine is configured to change transmission directions of the second sub-wavelength light beams for being incident on a plurality of second beam combining regions included in the second beam combining member, where the first switching engine and the second switching engine jointly change transmission directions of sub-wavelength light beams along a wavelength plane and a port plane, the wavelength plane and the port plane are perpendicular to each other, and both the wavelength plane and the port plane are parallel to transmission directions of the first light beams. The second beam combining regions are configured to perform beam combining on the received second sub-wavelength light beams to form third light beams, and the second beam combining member is configured to transmit the third light beams to the output ports.

It can be learned that, the optical switching apparatus in this embodiment can change a transmission direction of at least one sub-wavelength light beam of the first light beams obtained by the input ports along the port plane XY and along the wavelength plane ZY, to implement deflection of the transmission direction of the sub-wavelength light beam along the port plane XY and along the wavelength plane ZY. It is ensured that the optical switching apparatus in this embodiment can switch, to an output port at any location included in the output port array, a sub-wavelength light beam obtained by an input port at any location of the input port array, thereby implementing deflection of the sub-wavelength light beam along any direction, and effectively avoiding a disadvantage that a quantity of the input ports and a quantity of the output ports included in the optical switching apparatus are limited. Because the transmission directions of the sub-wavelength light beams may be changed for a plurality of times by using the first switching engine and the second switching engine, insertion loss of changing the transmission directions of the sub-wavelength light beams is reduced, and accuracy of switching the transmission directions of the sub-wavelength light beams is improved.

Based on the first aspect, in an optional implementation, at least one lens included in the first lens group is configured to converge the plurality of second light beams to the second dispersion member along the wavelength plane and/or the port plane.

It can be learned that, the first lens group according to this aspect can converge the plurality of second light beams on the second dispersion member along the wavelength plane and the port plane, to ensure that the second light beams can be successfully transmitted to the second switching engine, to achieve an objective of changing the transmission directions.

According to the first aspect, the first dispersion member, the second dispersion member, the first beam combining member, and the second beam combining member are a same grating, the first switching engine and the second switching engine are a same switching engine, and the optical switching apparatus further includes a switching and separation module. A first transmission region of the switching and separation module is configured to receive the first light beams, and is configured to transmit the first light beams to the first dispersion member in a transmission manner. A reflection region of the switching and separation module is configured to receive the second light beams, and is configured to transmit the second light beams to the first lens group in a reflection manner. A second transmission region of the switching and separation module is configured to receive the third light beams, and is configured to transmit the third light beams to the output ports in the transmission manner.

It can be learned that, in a process in which the optical switching apparatus according to this aspect deflects transmission directions of light beams, only one grating is used to implement a process of decomposing the first light beams to form the plurality of first sub-wavelength light beams, a process of performing beam combining on the plurality of first sub-wavelength light beams to form second light beams, a process of decomposing the second light beams to form the plurality of second sub-wavelength light beams, and a function of performing beam combining on the plurality of second sub-wavelength light beams to form the third light beams. In addition, the optical switching apparatus can deflect the transmission directions of the first sub-wavelength light beams by using only one switching apparatus, and can further deflect the transmission directions of the second sub-wavelength light beams, thereby improving utilization of the optical components, reducing an overall volume of the optical switching apparatus, and improving space utilization of the optical switching apparatus.

Based on the first aspect, in an optional implementation, a distance between the switching and separation module included in the optical switching apparatus and the first lens group is equal to an equivalent focal length of the first lens group.

Based on the first aspect, in an optional implementation, the optical switching apparatus includes an input port array and an output port array, the input port array includes a plurality of input ports along each of a first direction and a third direction, the output port array includes a plurality of output ports along each of the first direction and the third direction, both the first direction and the third direction are perpendicular to the transmission directions of the first light beams, and the first direction and the third direction are perpendicular to each other.

It can be learned that, the plurality of input ports included in the output port array according to this aspect are arranged in a two-dimensional direction, and the plurality of output ports included in the output port array are also arranged in a two-dimensional direction, thereby effectively ensuring that the optical switching apparatus according to this aspect can implement switching of sub-wavelength light beams in more transmission directions.

Based on the first aspect, in an optional implementation, the optical switching apparatus includes a first quantity of output ports along the first direction, the optical switching apparatus includes a second quantity of output ports along the third direction, and both the first direction and the third direction are perpendicular to the transmission directions of the first light beams. A quantity of first beam combining regions included in the first beam combining member along the first direction is less than or equal to the first quantity, and a quantity of first beam combining regions included in the first beam combining member along the third direction is less than or equal to the second quantity. A quantity of second beam combining regions included in the second beam combining member along the first direction is less than or equal to the first quantity, and a quantity of second beam combining regions included in the second beam combining member along the third direction is less than or equal to the second quantity.

Based on the first aspect, in an optional implementation, the optical switching apparatus includes a plurality of input ports, a second lens group is further included between the plurality of input ports and the first dispersion member, and the second lens group includes an odd quantity of lenses. The second lens group is configured to make a plurality of first light beams incident on a first region and a second region of the first dispersion member at different incident angles.

Based on the first aspect, in an optional implementation, the first region and the second region overlap on the first dispersion member.

It can be learned that, the plurality of first light beams are incident on a same location of the first dispersion member, so that it can be ensured that the plurality of first sub-wavelength light beams emitted from the first dispersion member are incident on the first switching engine in the direction perpendicular to the first switching engine, thereby reducing degradation of bandwidths when the plurality of first sub-wavelength light beams is incident on the first switching engine.

Based on the first aspect, in an optional implementation, the first dispersion member is configured to emit different first sub-wavelength light beams at different emission angles.

Based on the first aspect, in an optional implementation, a third lens group is further included between the first dispersion member and the first switching engine, and the third lens group includes an odd quantity of lenses. The third lens group is configured to make the plurality of first sub-wavelength light beams incident on the first switching engine in a direction perpendicular to the first switching engine.

Based on the first aspect, in an optional implementation, the first switching engine includes a plurality of first switching regions, and the first sub-wavelength light beams emitted from different first switching regions are incident on different first beam combining regions.

Based on the first aspect, in an optional implementation, wavelengths of a plurality of first sub-wavelength light beams received by a same first switching region are different from each other.

Based on the first aspect, in an optional implementation, wavelengths of a plurality of first sub-wavelength light beams received by a same first switching region are at least partially the same.

Based on the first aspect, in an optional implementation, a collimation lens group is included between the input port and the first dispersion member, the collimation lens group includes one or more collimation lenses, the input ports are located at a front focus of the collimation lens group, and the collimation lens group is configured to collimate first light beams from the input ports.

It can be learned that, the first light beam from the input port is transmitted in free space. To avoid severe optical power attenuation caused by excessive divergence in a transmission process of the first light beam in the free space, the collimation lens group can collimate the first light beam from the input port, thereby effectively reducing optical power attenuation of the first light beam.

Based on the first aspect, in an optional implementation, when a sub-wavelength light beam *λ*M included in the first light beams is incident on the first switching engine, the first switching engine changes a transmission direction of the sub-wavelength light beam *λ*M along both the wavelength plane ZY and the port plane XY; or when the sub-wavelength light beam *λ*M is incident on the second switching engine, the second switching engine changes the transmission direction of the sub-wavelength light beam *λ*M along the wavelength plane ZY.

The sub-wavelength light beam *λ*M is any sub-wavelength light beam included in any first light beam obtained by any output port.

Based on the first aspect, in an optional implementation, when the sub-wavelength light beam *λ*M included in the first light beams is incident on the first switching engine, the first switching engine changes the transmission direction of the sub-wavelength light beam *λ*M along both the wavelength plane ZY and the port plane XY. When the sub-wavelength light beam *λ*M is incident on the second switching engine, the second switching engine changes the transmission direction of the sub-wavelength light beam *λ*M along the port plane XY.

Based on the first aspect, in an optional implementation, when the sub-wavelength light beam *λ*M included in the first light beams is incident on the first switching engine, the first switching engine changes the transmission direction of the sub-wavelength light beam *λ*M along both the wavelength plane ZY and the port plane XY. When the sub-wavelength light beam *λ*M is incident on the second switching engine, the second switching engine changes the transmission direction of the sub-wavelength light beam *λ*M along both the wavelength plane ZY and the port plane XY.

Based on the first aspect, in an optional implementation, when the sub-wavelength light beam *λ*M included in the first light beams is incident on the first switching engine, the first switching engine changes the transmission direction of the sub-wavelength light beam *λ*M along the wavelength plane ZY. When the sub-wavelength light beam *λ*M is incident on the second switching engine, the second switching engine changes the transmission direction of the sub-wavelength light beam *λ*M along both the wavelength plane ZY and the port plane XY.

Based on the first aspect, in an optional implementation, when the sub-wavelength light beam *λ*M included in the first light beams is incident on the first switching engine, the first switching engine changes the transmission direction of the sub-wavelength light beam *λ*M along the wavelength plane ZY. When the sub-wavelength light beam *λ*M is incident on the second switching engine, the second switching engine changes the transmission direction of the sub-wavelength light beam *λ*M along the port plane XY.

Based on the first aspect, in an optional implementation, when the sub-wavelength light beam *λ*M included in the first light beams is incident on the first switching engine, the first switching engine changes the transmission direction of the sub-wavelength light beam *λ*M along the port plane XY. When the sub-wavelength light beam *λ*M is incident on the second switching engine, the second switching engine changes the transmission direction of the sub-wavelength light beam *λ*M along the port plane XY and the wavelength plane ZY.

Based on the first aspect, in an optional implementation, when the sub-wavelength light beam *λ*M included in the first light beams is incident on the first switching engine, the first switching engine changes the transmission direction of the sub-wavelength light beam *λ*M along the port plane XY. When the sub-wavelength light beam *λ*M is incident on the second switching engine, the second switching engine changes the transmission direction of the sub-wavelength light beam *λ*M along the wavelength plane ZY.

Based on the first aspect, in an optional implementation, a fourth lens group is included between the first switching engine and the first beam combining member, and the fourth lens group includes an odd quantity of lenses. The fourth lens group is configured to transmit first sub-wavelength light beams emitted from different first switching regions to different first beam combining regions included in the first beam combining member, and is configured to converge, on a first beam combining region, first sub-wavelength light beams emitted from a same first switching region.

Based on the first aspect, in an optional implementation, a fifth lens group is further arranged between the second dispersion member and the second switching engine, and the fifth lens group includes an odd quantity of lenses. The fifth lens group is configured to converge the plurality of second sub-wavelength light beams on the second switching engine.

Based on the first aspect, in an optional implementation, a sixth lens group is included between the second switching engine and the second beam combining member, and the sixth lens group includes an odd quantity of lenses. The sixth lens group is configured to converge the plurality of second sub-wavelength light beams on the second beam combining member.

Based on the first aspect, in an optional implementation, a seventh lens group is further included between the second beam combining member and the output ports, and the seventh lens group includes an odd quantity of lenses. The seventh lens group is configured to converge the plurality of third light beams on the output ports, to output the third light beams from the optical switching apparatus.

Based on the first aspect, in an optional implementation, the second switching engine includes a plurality of second switching regions, and the second sub-wavelength light beams emitted from different second switching regions are incident on different second beam combining regions.

Based on the first aspect, in an optional implementation, wavelengths of a plurality of second sub-wavelength light beams received by a same second switching region are different form each other.

Based on the first aspect, in an optional implementation, wavelengths of a plurality of second sub-wavelength light beams received by a same second switching region are at least partially the same.

Based on the first aspect, in an optional implementation, the transmission region of the switching and separation module is of a transparent structure, to ensure that a light beam can be transmitted through transmission of the transmission region.

Based on the first aspect, in an optional implementation, the reflection region of the switching and separation module is a reflective film on a surface of the switching and separation module, to ensure that an optical signal can be transmitted through reflection of the reflective film.

According to a second aspect, an embodiment of the present invention provides an optical switching method applied to an optical switching apparatus. The optical switching apparatus includes input ports, a first dispersion member, a first switching engine, a first beam combining member, a first lens group, a second dispersion member, a second beam combining member, a second switching engine, and output ports. The method includes: obtaining first light beams by using the input ports; receiving the first light beams from the input ports by using the first dispersion member, decomposing the first light beams into a plurality of first sub-wavelength light beams, and making the plurality of first sub-wavelength light beams incident on the first switching engine; changing, by using the first switching engine, transmission directions of the first sub-wavelength light beams for being incident on a plurality of first beam combining regions included in the first beam combining member; performing beam combining on the received first sub-wavelength light beams by using the first beam combining regions to form second light beams, and making a plurality of second light beams incident on the first lens group; converging the plurality of second light beams to the second dispersion member by using the first lens group, where the first lens group includes an odd quantity of lenses; decomposing each second light beam into a plurality of second sub-wavelength light beams by using the second dispersion member, and making the plurality of second sub-wavelength light beams incident on the second switching engine; changing, by using the second switching engine, transmission directions of the second sub-wavelength light beams for being incident on a plurality of second beam combining regions included in the second beam combining member, where the first switching engine and the second switching engine jointly change transmission directions of sub-wavelength light beams along a wavelength plane and a port plane, the wavelength plane and the port plane are perpendicular to each other, and both the wavelength plane and the port plane are parallel to transmission directions of the first light beams; and performing beam combining on the received second sub-wavelength light beams by using the second beam combining regions to form third light beams, and transmitting the third light beams to the output ports.

For a description of beneficial effects of this aspect, refer to the first aspect. Details are not described again.

According to the second aspect, the first dispersion member, the second dispersion member, the first beam combining member, and the second beam combining member are a same grating, the first switching engine and the second switching engine are a same switching engine, and the optical switching apparatus further includes a switching and separation module. After the obtaining first light beams by using the input ports, the method further includes: receiving the first light beams by using a first transmission region of the switching and separation module, and transmitting the first light beams to the first dispersion member in a transmission manner; receiving the second light beams by using a reflection region of the switching and separation module, and transmitting the second light beams to the first lens group in a reflection manner; and receiving the third light beams by using a second transmission region of the switching and separation module, and transmitting the third light beams to the output ports in the transmission manner.

According to a third aspect, the present invention provides an optical switching node, including a plurality of optical switching apparatuses. Different optical switching apparatuses are connected to each other through an optical fiber, and the optical switching apparatuses are described in the first aspect. Details are not described again.

According to a fourth aspect, the present invention provides an optical communication system, including a plurality of optical switching nodes. The optical switching nodes are described in the second aspect.

### BRIEF DESCRIPTION OF DRAWINGS

FIG. 1a is an example diagram of a structure of an optical switching node according to this application;
FIG. 1b is an example diagram of another structure of an optical switching node according to this application;
FIG. 2a is an example diagram of a structure of a first embodiment of an optical switching apparatus along a wavelength plane according to this application, but not forming part of the claimed invention;
FIG. 2b is an example diagram of a structure of the first embodiment of an optical switching apparatus along a port plane according to this application;
FIG. 3a is an example diagram of decomposing a first light beam by a first dispersion member according to this application;
FIG. 3b is an example diagram of a structure of the first embodiment of a first dispersion member according to this application;
FIG. 4 is an example diagram of a structure of the first embodiment of an input port array and an output port array according to this application;
FIG. 5 is an example diagram of a partial structure of the first embodiment of an optical switching apparatus along a wavelength plane according to this application;
FIG. 6 is an example diagram of a structure of the first embodiment of a first switching engine according to this application;
FIG. 7 is an example diagram of a structure of a second embodiment of an optical switching apparatus along a wavelength plane according to this application;
FIG. 8 is an example diagram of a structure of a second embodiment of an optical switching apparatus along a port plane according to this application;
FIG. 9 is an example diagram of a structure of an embodiment of a switching and separation module according to this application;
FIG. 10 is an example diagram of a structure of the second embodiment of an optical switching apparatus along a wavelength plane according to this application;
FIG. 11 is an example diagram of a structure of the second embodiment of an optical switching apparatus along a port plane according to this application;
FIG. 12 is an example diagram of a structure of a third embodiment of an optical switching apparatus along a wavelength plane according to this application;
FIG. 13 is a flowchart of steps of a fourth firstembodiment of an optical switching method, not forming part of the claimed invention, according to this application;
FIG. 14A and FIG. 14B are flowcharts of steps of a fifth embodiment of an optical switching method according to this application;
FIG. 15A and FIG. 15B are flowcharts of steps of a sixth embodiment of an optical switching method, not forming part of the claimed invention, according to this application; and
FIG. 16 is an example diagram of a structure of a seventh embodiment of an optical communication system according to this application.

### DESCRIPTION OF EMBODIMENTS

The following clearly and completely describes the technical solutions in embodiments of the present invention with reference to the accompanying drawings in embodiments of the present invention. It is clear that the described embodiments are merely some but not all of embodiments of the present invention. All other embodiments obtained by a person skilled in the art based on embodiments of the present invention without creative efforts shall fall within the protection scope of the present invention.

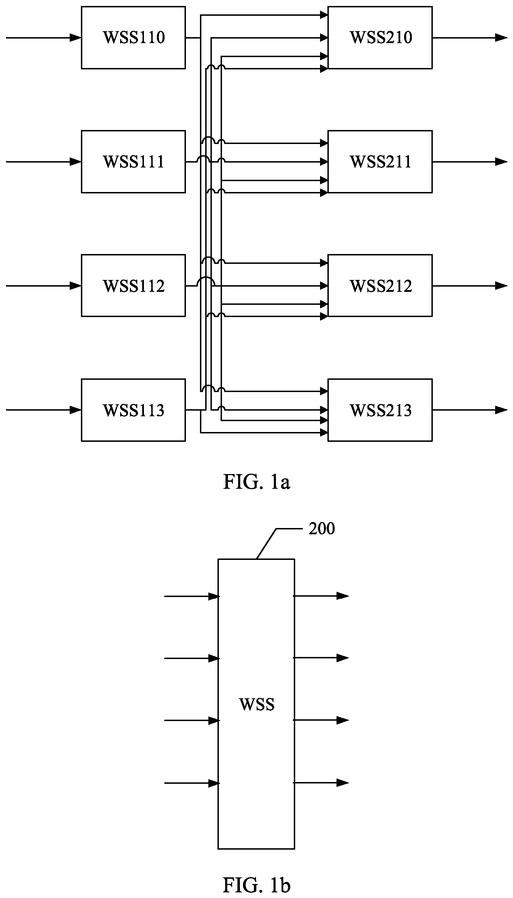

This application provides an optical switching node. The optical switching node is an ROADM or an optical switching node in a data center network. In this embodiment, an example in which the optical switching node is an ROADM is used for description. In another example, the optical switching node may also be referred to as a wavelength crossconnect (wavelength crossconnect, WXC), an optical crossconnect (optical crossconnect, OXC), a wavelength switching node, or the like. This is not specifically limited in this embodiment of this application. The following describes a structure of an ROADM provided in this application with reference to FIG. 1a. FIG. 1a is an example diagram of a structure of the optical switching node according to this application.

As shown in FIG. 1a, the ROADM includes four WSSs (that is, a WSS 110, a WSS 111, a WSS 112, and a WSS 113) of an input side, and further includes four WSSs (that is, a WSS 210, a WSS 211, a WSS 212, and a WSS 213) of an output side. Each WSS of the input side is a 1*4 WSS (that is, including one input port and four output ports), and each WSS of the output side is a 4*1 WSS (that is, including four input ports and one output port). The output ports of each WSS of the input side are connected to the input ports of each WSS of the output side.

The eight WSSs in this embodiment are located at different locations, and a quantity of the WSSs included in the ROADM and the location of the WSSs are not limited in this embodiment. The WSSs located at different locations are configured to perform transmission direction switching of optical signals, to implement flexible scheduling of the optical signals.

Using the WSS 110 as an example, the WSS 110 may transmit an optical signal to any WSS that is included in the output side and that is connected to the WSS 110 through an optical fiber, to implement switching of the optical signal in different directions. For example, in the ROADM in this embodiment, the WSS 210, the WSS 211, the WSS 212, and the WSS 213 are connected to the WSS 110 through the optical fiber, and the WSS 110 may transmit the optical signal to any WSS of the WSS 210, the WSS 211, the WSS 212, and the WSS 213.

A plurality of input ports of the input side shown in FIG. 1a may be arranged along a one-dimensional direction, or the plurality of input ports may be arranged along a two-dimensional direction. A plurality of output ports of the output side in this embodiment may be arranged along a one-dimensional direction, or the plurality of output ports may be arranged along a two-dimensional direction.

In this embodiment, an example in which the ROADM includes a plurality of WSSs is used. Optionally, for a structure of the ROADM, refer to FIG. 1b. FIG. 1b is an example diagram of another structure of the optical switching node according to this application.

The ROADM may include a WSS 200. In this embodiment, an example in which the WSS 200 includes a plurality of input ports and a plurality of output ports is used, and a quantity of the input ports and a quantity of the output ports are not limited in this embodiment. For example, as shown in FIG. 1b, the WSS 200 includes four input ports and four output ports. The plurality of input ports included in the WSS 2200 may be arranged along a one-dimensional direction, or the plurality of input ports may be arranged along a two-dimensional direction. The plurality of output ports may be arranged along a one-dimensional direction, or the plurality of output ports may be arranged along a two-dimensional direction.

The following describes a structure of the optical switching apparatus provided in this application with reference to different embodiments.

### Embodiment 1

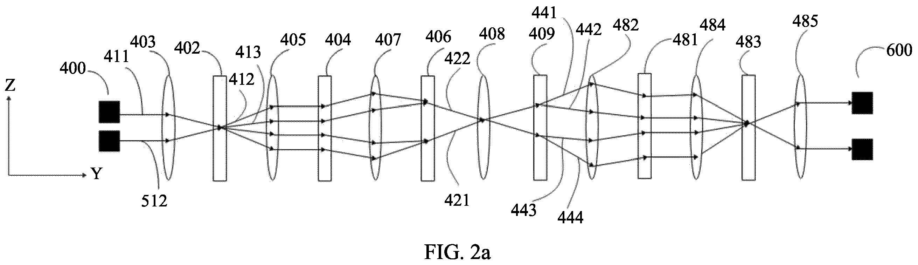

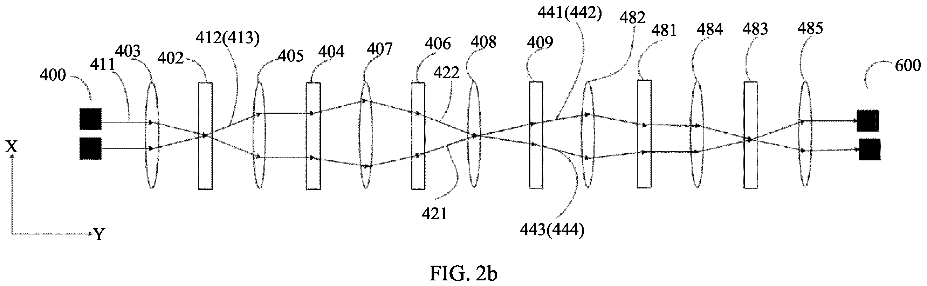

The following describes a specific structure of an optical switching apparatus helpful for understanding the invention but not covered by the claims with reference to FIG. 2a and FIG. 2b. In this embodiment, an example in which the optical switching apparatus is any WSS shown in FIG. 1a or FIG. 1b is used. For example, the WSS in this embodiment is the WSS 200 shown in FIG. 1b. FIG. 2a is a schematic diagram of a structure of the optical switching apparatus along a wavelength plane, and FIG. 2b is a schematic diagram of a structure of the optical switching apparatus along a port plane.

First, specific locations of the wavelength plane and the port plane in this embodiment are described.

A wavelength plane ZY and a port plane XY in this embodiment are planes perpendicular to each other. The wavelength plane ZY is a plane along both a second direction Y and a third direction Z, the port plane XY is a plane along both a first direction X and the second direction Y, and the first direction X, the second direction Y, and the third direction Z are directions perpendicular to each other. Transmission directions of first light beams obtained by using input ports of the optical switching apparatus in this embodiment are the second direction Y described above. The third direction Z in this embodiment may also be referred to as a wavelength direction or a dispersion direction, and the first direction X may also be referred to as a switching direction or a port direction.

The following defines the foregoing directions with reference to components of the optical switching apparatus in this embodiment.

The optical switching apparatus in this embodiment includes an input port array 400, a first dispersion member 402, a first switching engine 404, a first beam combining member 406, a first lens group 408, a second dispersion member 409, a second beam combining member 483, a second switching engine 481, and an output port array 600.

### Definition 1

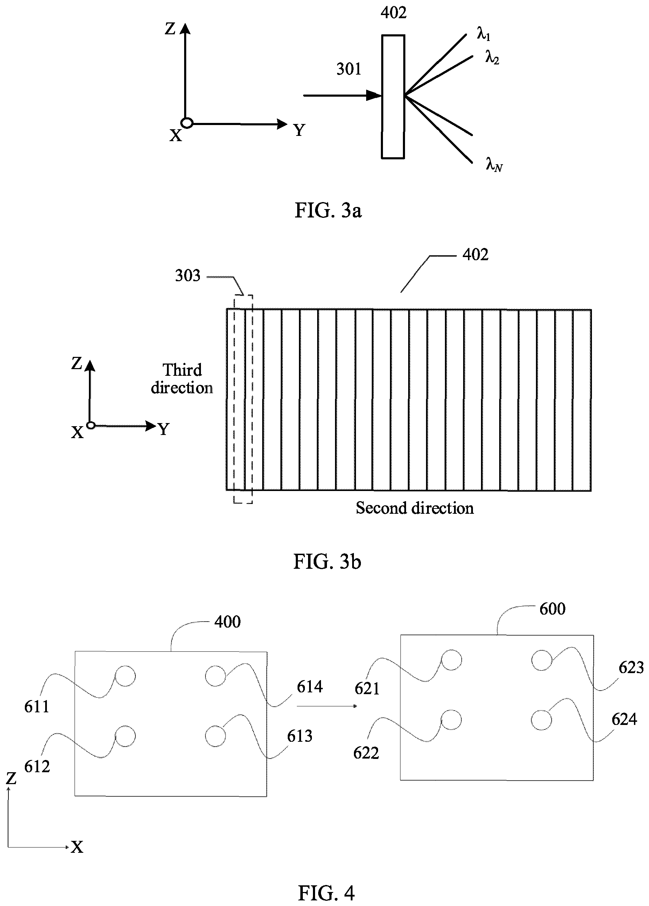

Using the first dispersion member 402 as a reference, as shown in FIG. 3a, the first dispersion member 402 is configured to receive a first light beam 301 from an input port. The first dispersion member 402 is configured to decompose the first light beam 301 to form a plurality of first sub-wavelength light beams with different wavelengths, for example, form a first sub-wavelength light beam with a wavelength *λ*₁, a first sub-wavelength light beam with a wavelength *λ*₂, and so on, to form a first sub-wavelength light beam with a wavelength *λ_{N}*. A specific value of N is not limited in this example, provided that *λ*₁, *λ*₂ to *λ_{N}* are different from each other. The first dispersion member 402 can emit the first sub-wavelength light beam with the wavelength *λ*₁, the first sub-wavelength light beam with the wavelength *λ*₂, and the first sub-wavelength light beam with the wavelength *λ_{N}* from the first dispersion member 402 at different emission angles for transmission. The first direction X is a direction in which the emitted first sub-wavelength light beams are scattered, that is, a direction in which the plurality of first sub-wavelength light beams are angularly dispersed by using the first dispersion member 402. A transmission direction of the first light beam 301 is a direction Y shown in FIG. 3a, and the third direction Z is a direction perpendicular to both the first direction X and the transmission direction Y of the first light beam 301.

### Definition 2

The first dispersion member 402 is still used as a reference. With reference to FIG. 3b, an example in which the first dispersion member 402 is a volume grating is used for description. In this example, the third direction Z is a direction parallel to a grating scale 303, and the first direction X is a direction perpendicular to the grating scale 303. It can be learned that, the third direction Z is perpendicular to the first direction X.

### Definition 3

In this definition, the first switching engine 404 is used as a reference. Optionally, if the first switching engine 404 is a liquid crystal on silicon (liquid crystal on silicon, LCOS) chip, the third direction Z is a direction in which the first switching engine 404 loads a phase grating to obtain diffractive light. Optionally, if the first switching engine 404 is a liquid crystal (liquid crystal) array chip or a micro-electromechanical system (micro-electromechanical system, MEMS), the third direction Z is a transmission direction of a deflected light beam.

The following describes optical components included in the optical switching apparatus in this embodiment one by one.

The optical switching apparatus in this embodiment includes an input port array. A plurality of input ports included in the input port array in this embodiment may be arranged in N rows and M columns, and values of N and M are both positive integers greater than or equal to 1. For a structure of the input port array in this embodiment, refer to FIG. 4. The input port array 400 shown in FIG. 4 includes four input ports arranged in a form of two rows and two columns, for example, an input port 611, an input port 612, an input port 613, and an input port 614. It should be noted that, an arrangement form of the plurality of input ports in a transmission plane XZ is not limited in this embodiment. For example, the plurality of input ports may alternatively be randomly arranged in the transmission plane XZ, or may be integrally arranged in a form of a circle, an ellipse, or the like. The transmission plane XZ is a plane along both the first direction X and the third direction Z, and the transmission plane XZ is separately perpendicular to the wavelength plane ZY and the port plane XY.

The input ports in this embodiment may be ports of input optical fibers connected to the optical switching apparatus, and the input optical fibers transmit the first light beams to the optical switching apparatus through the input ports, to perform transmission direction switching. It should be noted that, in this embodiment, an example in which the input port array includes input ports of a plurality of input optical fibers is used for description. In another example, the input port array may alternatively be a planar lightwave circuit (planar lightwave circuit, PLC), and the input ports may be ports of the PLC.

The input ports in this embodiment are configured to obtain the first light beams, and transmit the first light beams to the optical switching apparatus. The following optionally describes a process in which the input ports in this embodiment obtain the first light beams. For example, the optical switching apparatus in this embodiment is the WSS 200 shown in FIG. 1b, the input optical fibers are connected to a laser, the input optical fibers receive first light beams from the laser, and the input optical fibers transmit the first light beams to the optical switching apparatus through the input ports. For another example, the optical switching apparatus receives, through the input optical fibers, first light beams from a previous optical switching node, and the input optical fibers transmit the first light beams to the optical switching apparatus through the input ports. A source of the first light beams is not limited in this embodiment, provided that the input ports can transmit the first light beams to the optical switching apparatus, to perform transmission direction switching.

A first light beam that is input through an input port may be a light beam including a single wavelength (that is, monochromatic light), or may be a light beam including a plurality of wavelengths (that is, colored light or polychromatic light). This is not specifically limited in this embodiment. In this embodiment, an example in which a first light beam obtained by each input port is a light beam including a plurality of wavelengths is used for description. In an example shown in FIG. 3a, the first light beam includes N wavelengths, that is *λ*₁, *λ*₂ to *λ_{N}*. A value of N is not limited in this embodiment.

Still refer to FIG. 2a and FIG. 2b, the optical switching apparatus in this embodiment includes the first dispersion member 402, and the first dispersion member 402 in this embodiment is a grating. One or more first light beams that are input through the input ports are incident on the first dispersion member 402, and the first dispersion member 402 is configured to decompose each first light beam to form a plurality of first sub-wavelength light beams.

A quantity of the first light beams is not limited in this embodiment. For example, still as shown in FIG. 4, if the input port array includes four input ports, a quantity of the first light beams in this embodiment is four. With reference to FIG. 4 and FIG. 2a, along the wavelength plane ZY, transmission directions of first light beams from the input port 611 and the input port 614 are in a transmission state of a same direction. It can be learned that, in FIG. 2a, the transmission directions of the first light beams from the input port 611 and the input port 614 are in an overlapping state. Similarly, transmission directions of first light beams from the input port 612 and the input port 613 are in a transmission state of a same direction. It can be learned that, in FIG. 2a, the transmission directions of the first light beams from the input port 612 and the input port 613 are in an overlapping state. Transmission directions of first light beams from the input port 611 and the input port 612 are in a separated state.

Still with reference to FIG. 4 and FIG. 2b, the transmission directions of a first light beam from the input port 611 and a first light beam from the input port 612 are in a transmission state of a same direction. It can be learned that, in FIG. 2b, the first light beam from the input port 611 and the first light beam from the input port 612 are in an overlapping state. Similarly, transmission directions of a first light beam from the input port 614 and a first light beam from the input port 613 are in a transmission state of a same direction. It can be learned that, the transmission directions of the first light beam from the input port 614 and the first light beam from the input port 613 are in an overlapping state. Transmission directions of the first light beam from the input port 611 and the first light beam from the input port 614 are in a separated state.

In this embodiment, one first light beam is used as an example for description. For example, the first light beam is a first light beam 411 shown in FIG. 2a and FIG. 2b. The first light beam 411 may be a first light beam input by any input port included in the input port array. For a description of a process in which the optical switching apparatus deflects a transmission direction of another first light beam, refer to the description of deflection of the first light beam 411. Details are not described again.

In FIG. 2a, an example in which the first dispersion member 402 decomposes the first light beam 411 to emit a first sub-wavelength light beam 412 and a first sub-wavelength light beam 413 is used for description. As shown in FIG. 2a, along the wavelength plane ZY, the first sub-wavelength light beam 412 and the first sub-wavelength light beam 413 are emitted from the first dispersion member 402 at different emission angles. It can be learned that, along the wavelength plane ZY, transmission directions of the first sub-wavelength light beam 412 and the first sub-wavelength light beam 413 are in a separated state.

Optionally, as shown in FIG. 2b, along the port plane XY, the first sub-wavelength light beam 412 and the first sub-wavelength light beam 413 are emitted from the first dispersion member 402 at a same first emission angle. It can be learned that, along the port plane XY, the transmission directions of the first sub-wavelength light beam 412 and the first sub-wavelength light beam 413 are in a transmission state of a same direction.

Optionally, a collimation lens group is included between the input ports and the first dispersion member 402 in this embodiment, and the collimation lens group includes one or more collimation lenses. The input ports in this embodiment are located at a front focus of the collimation lens group. The collimation lens group is configured to collimate the first light beam 411 from the input port. Specifically, the first light beam from the input port is transmitted in free space. To avoid severe optical power attenuation caused by excessive divergence in a transmission process of the first light beam in the free space, the collimation lens group in this embodiment can collimate the first light beam from the input port, thereby effectively reducing optical power attenuation of the first light beam.

In this embodiment, along the second direction Y, the optical switching apparatus further includes a second lens group 403 located between the input port array and the first dispersion member 402, and the second lens group 403 includes an odd quantity of lenses. The second lens group 403 is configured to make a plurality of first light beams 411 incident on the first dispersion member 402 at different incident angles.

If the optical switching apparatus in this embodiment includes the collimation lens group, the second lens group 403 is located between the collimation lens group and the first dispersion member 402, the first dispersion member 402 is located at an equivalent back focus of the second lens group 403, and a distance between the first dispersion member 402 and the second lens group 403 is equal to an equivalent focal length of the second lens group 40

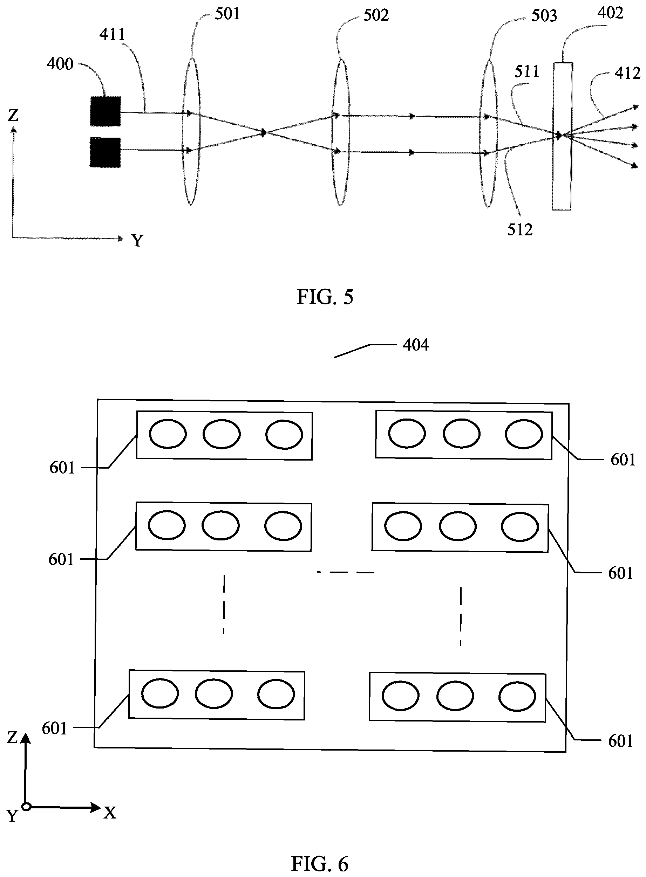

The second lens group 403 in this embodiment includes the odd quantity of lenses, and the first light beams in this embodiment are converged on the first dispersion member 402 at different incident angles after switching of an even quantity of focal lengths of the odd quantity of lenses included in the second lens group 403. For example, as shown in FIG. 5, the second lens group 403 includes three lenses, that is, the second lens group 403 includes a lens 501, a lens 502, and a lens 503 that are sequentially arranged along the second direction Y. A back focus of the lens 501 coincides with a front focus of the lens 502, a back focus of the lens 502 coincides with a front focus of the lens 503, and the first dispersion member 402 is located at a back focus of the lens 503.

It can be learned that, in an example shown in FIG. 5, the plurality of first light beams 411 are converged on the first dispersion member 402 at different incident angles after switching of six focal lengths of the three lenses included in the second lens group 403. The first dispersion member 402 separately decomposes and separates the first light beams to emit the first sub-wavelength light beams.

Optionally, the second lens group 403 in this embodiment meets a curvature condition. When the second lens group 403 meets the curvature condition, it is effectively ensured that the second lens group 403 has a function of converging the first light beams along both the wavelength plane and the port plane. The curvature condition is that the second lens group 403 includes at least one lens having a curvature along the wavelength plane and the second lens group 403 further includes at least one lens having a curvature along the port plane.

For example, the second lens group 403 includes one or more lenses that have curvatures only along the wavelength plane, and further includes one or more lenses that have curvatures only along the port plane. For another example, the second lens group 403 includes one or more lenses that have curvatures along both the wavelength plane and the port plane. A value of the curvature is not limited in this embodiment, provided that the lens can have a converging function while having the curvature.

Specifically, FIG. 2a and FIG. 2b are still used as an example. The first light beam 411 converged by the optical switching apparatus by using the second lens group 403 is incident on a first region of the first dispersion member 402, and a first light beam 512 converged by using the second lens group 403 is incident on a second region of the first dispersion member 402. The first light beam 411 and the first light beam 512 are two different first light beams obtained by two different input ports. The first region and the second region completely overlap or partially overlap in the transmission plane XZ. In this embodiment, that the first region and the second region completely overlap in the transmission plane XZ is used as an example.

The optical switching apparatus further includes the first switching engine 404, where the first switching engine 404 is configured to receive the plurality of first sub-wavelength light beams from the first dispersion member 402, and change transmission directions of the plurality of first sub-wavelength light beams.

The following describes a manner of transmitting the plurality of first sub-wavelength light beams from the first dispersion member 402 to the first switching engine 404.

The optical switching apparatus in this embodiment further includes a third lens group 405 located between the first dispersion member 402 and the first switching engine 404, and the third lens group 405 includes an odd quantity of lenses. The third lens group 405 is configured to make the plurality of first sub-wavelength light beams incident on the first switching engine 404 in the wavelength plane ZY and the port plane XY in a direction perpendicular to the first switching engine 404 and a direction in which the plurality of first sub-wavelength light beams are parallel to each other.

The first dispersion member 402 is located at a location of an equivalent front focus of the third lens group 405, and the first switching engine 404 is located at a location of an equivalent back focus of the third lens group 405. A distance between the first dispersion member 402 and the third lens group 405 and a distance between the first switching engine 404 and the third lens group 405 are both equal to an equivalent focal length of the third lens group 405.

The third lens group 405 in this embodiment includes the odd quantity of lenses. To be specific, the first sub-wavelength light beams in this embodiment are incident on the first switching engine 404 in the direction perpendicular to the first switching engine 404 after switching of an even quantity of focal lengths of the odd quantity of lenses included in the third lens group 405.

Optionally, the third lens group 405 in this embodiment meets the curvature condition. For a description of the curvature condition, refer to the description of the second lens group 403 meeting the curvature condition. Details are not described again.

In this embodiment, the plurality of first light beams are incident on a same location of the first dispersion member 402, and it can be ensured that the plurality of first sub-wavelength light beams emitted from the first dispersion member 402 are incident on the first switching engine 404 in the direction perpendicular to the first switching engine 404, thereby reducing degradation of bandwidths when the plurality of first sub-wavelength light beams are incident on the first switching engine 404.

In this embodiment, an example in which the first switching engine 404 is an LCOS chip is used for description. The plurality of first sub-wavelength light beams formed by dispersion performed by the first dispersion member 402 on the first light beams obtained by the input ports can generate a plurality of light spots on the first switching engine 404.

For an arrangement manner of the light spots generated by the plurality of first sub-wavelength light beams on the first switching engine 404 in this embodiment, refer to FIG. 6. For example, the first switching engine has a plurality of first switching regions 601, and first sub-wavelength light beams emitted from different first switching regions 601 can be incident on different locations of the first beam combining member 406.

In this embodiment, an arrangement manner of the first switching regions included in the first switching engine 404 and an arrangement manner of output ports included in the optical switching apparatus need to meet a first arrangement condition, to ensure that the first sub-wavelength light beams whose transmission directions are changed by the first switching engine 404 can be output through the output ports.

The first arrangement condition in this embodiment is that a quantity of first switching regions 601 along the first direction X is less than or equal to a first quantity and a quantity of first switching regions 601 along the third direction Z is less than or equal to a second quantity. The first quantity is a quantity of output ports included in the output port array along the first direction X. The second quantity is a quantity of output ports included in the output port array along the third direction Z. For example, if the plurality of first switching regions 601 are arranged in a manner of four rows and five columns on the first switching engine 404, the plurality of output ports are also arranged in the manner of four rows and five columns in the output port array.

For example, wavelengths of a plurality of first sub-wavelength light beams received by a same first switching region 601 included in the first switching engine 404 are different. It can be learned that, colors of all light spots in the same first switching region 601 are different. For example, the first switching region 601 in this embodiment receives M first sub-wavelength light beams, and wavelengths of the M first sub-wavelength light beams are different from each other, such as *λ*1, *λ*2 to *λ*M.

For another example, wavelengths of a plurality of first sub-wavelength light beams received by a same first switching region 601 included in the first switching engine 404 are the same. It can be learned that, colors of all light spots in the same first switching region 601 are the same. For example, the first switching region 601 in this embodiment also receives M first sub-wavelength light beams, and wavelengths of all the M first sub-wavelength light beams are *λ*M.

For another example, some wavelengths of a plurality of first sub-wavelength light beams received by a same first switching region 601 included in the first switching engine 404 are the same, and the other wavelengths are different. It can be learned that, for light spots located in the same first switching region, some light spots have a same color, and the other light spots have different colors.

The first switching engine 404 in this embodiment is configured to change the transmission directions of the first sub-wavelength light beams along the wavelength plane ZY and/or the port plane XY, to ensure that first sub-wavelength light beams emitted from different first switching regions 601 can be incident on different first beam combining regions included in the first beam combining member 406. It can be learned from FIG. 2a and FIG. 2b that, this embodiment is described by using an example in which the first switching engine 404 can change the transmission directions of the first sub-wavelength light beams along both the wavelength plane ZY and the port plane XY.

A fourth lens group 407 is included between the first switching engine 404 and the first beam combining member 406 in this embodiment, and the fourth lens group 407 includes an odd quantity of lenses. The fourth lens group 407 is configured to transmit first sub-wavelength light beams emitted from different first switching regions to different first beam combining regions included in the first beam combining member 406, and is configured to converge, on a first beam combining region, first sub-wavelength light beams emitted from a same first switching region.

The first switching engine 404 is located at a location of an equivalent front focus of the fourth lens group 407, and the first beam combining member 406 is located at a location of an equivalent back focus of the fourth lens group 407. A distance between the first switching engine 404 and the fourth lens group 407 and a distance between the first beam combining member 406 and the fourth lens group 407 are both equal to an equivalent focal length of the fourth lens group 407.

The fourth lens group 407 in this embodiment includes the odd quantity of lenses. To be specific, a plurality of first sub-wavelength light beams emitted from a same first switching region in this embodiment are converged on a corresponding first beam combining region after switching of an even quantity of focal lengths of the odd quantity of lenses included in the fourth lens group 407.

Optionally, the fourth lens group 407 in this embodiment meets the curvature condition. For a description of the curvature condition, refer to the description of the second lens group 403 meeting the curvature condition. Details are not described again.

When the first beam combining regions receive the plurality of first sub-wavelength light beams from the fourth lens group 407, the first beam combining regions are configured to perform beam combining on the plurality of first sub-wavelength light beams to form second light beams. It can be learned that, a quantity of the second light beams emitted from the first beam combining member 406 in this embodiment is equal to a quantity of the first beam combining regions included in the first beam combining member 406. For example, as shown in FIG. 2a, second light beams emitted from a first beam combining region of the first beam combining member 406 include a second light beam 421 and a second light beam 422.

In this embodiment, an arrangement manner of the first beam combining regions included in the first beam combining member 406 and an arrangement manner of the output ports included in the optical switching apparatus need to meet a second arrangement condition, to ensure that the plurality of second light beams emitted after beam combining by the first beam combining member 406 can be output through the output ports.

The second arrangement condition in this embodiment is that a quantity of first beam combining regions along the first direction X is less than or equal to the first quantity and a quantity of first beam combining regions along the third direction Z is less than or equal to the second quantity. For a description of the first quantity and the second quantity, refer to the foregoing description of the first arrangement condition. Details are not described again. For example, if the plurality of first beam combining regions are arranged in a manner of four rows and five columns on the first beam combining member 406, the plurality of output ports are also arranged in the manner of four rows and five columns in the output port array.

The first beam combining member 406 is configured to make the plurality of second light beams incident on the first lens group 408, where the first lens group 408 includes an odd quantity of lenses. The first lens group 408 is configured to converge the plurality of second light beams on the second dispersion member 409. The first beam combining member 406 is located at a location of an equivalent front focus of the first lens group 408, and the second dispersion member 409 is located at a location of an equivalent back focus of the first lens group 408. A distance between the first beam combining member 406 and the first lens group 408 and a distance between the second dispersion member 409 and the first lens group 408 are both equal to an equivalent focal length of the first lens group 408.

The first lens group 408 in this embodiment includes the odd quantity of lenses. To be specific, the second light beams in this embodiment are converged on the second dispersion member 409 after switching of an even quantity of focal lengths of the odd quantity of lenses included in the first lens group 408.

Optionally, the first lens group 408 in this embodiment meets the curvature condition. For a description of the curvature condition, refer to the description of the second lens group 403 meeting the curvature condition. Details are not described again.

The second dispersion member 409 is configured to decompose each second light beam to emit a plurality of second sub-wavelength light beams. For example, as shown in FIG. 2a, in the wavelength plane ZY, the second dispersion member 409 decomposes the second light beam 421 to obtain a second sub-wavelength light beam 441 and a second sub-wavelength light beam 442, and the second dispersion member 409 emits the second sub-wavelength light beam 441 and the second sub-wavelength light beam 442 at different emission angles in the wavelength plane ZY. It can be learned that, in the wavelength plane ZY, transmission directions of the second sub-wavelength light beam 441 and the second sub-wavelength light beam 442 are in a separated state.

As shown in FIG. 2b, in the port plane XY, the second dispersion member 409 decomposes the second light beam 421 to obtain the second sub-wavelength light beam 441 and the second sub-wavelength light beam 442, and the second dispersion member 409 emits the second sub-wavelength light beam 441 and the second sub-wavelength light beam 442 at a same emission angle in the port plane XY. It can be learned that, in the port plane XY, the transmission directions of the second sub-wavelength light beam 441 and the second sub-wavelength light beam 442 are in a transmission state of a same direction.

Similarly, as shown in FIG. 2a, in the wavelength plane ZY, the second dispersion member 409 decomposes the second light beam 422 to obtain the second sub-wavelength light beam 443 and the second sub-wavelength light beam 444, and the second dispersion member 409 emits the second sub-wavelength light beam 443 and the second sub-wavelength light beam 444 at different emission angles in the wavelength plane ZY. It can be learned that, in the wavelength plane ZY, the transmission directions of the second sub-wavelength light beam 443 and the second sub-wavelength light beam 444 are in a separated state.

As shown in FIG. 2b, in the port plane XY, the second dispersion member 409 decomposes the second light beam 422 to obtain the second sub-wavelength light beam 443 and the second sub-wavelength light beam 444, and the second dispersion member 409 emits the second sub-wavelength light beam 443 and the second sub-wavelength light beam 444 at a same emission angle in the port plane XY. It can be learned that, in the port plane, the transmission directions of the second sub-wavelength light beam 443 and the second sub-wavelength light beam 444 are in a transmission state of a same direction.

In this embodiment, an example in which the second switching engine 481 is an LCOS chip is used for description. The plurality of second sub-wavelength light beams from the second dispersion member 409 can generate a plurality of light spots on the second switching engine 481. For a description of the light spots generated by the second sub-wavelength light beams on the second switching engine 481, refer to the foregoing description of the light spots generated by the first sub-wavelength light beams on the first switching engine. Details are not described again.

It can be learned that, the second switching engine 481 in this embodiment has a plurality of second switching regions, and second sub-wavelength light beams emitted from different second switching regions can be incident on different locations of the second beam combining member 483. For a specific description of the second switching regions, refer to the foregoing description of the first switching regions. Details are not described again. For example, the second switching engine 481 has the plurality of second switching regions, and the second sub-wavelength light beams emitted from different second switching regions can be incident on different locations of the second beam combining member 483.

In this embodiment, an arrangement manner of the second switching regions included in the second switching engine 481 and an arrangement manner of the output ports included in the optical switching apparatus need to meet a third arrangement condition, to ensure that the second sub-wavelength light beams whose transmission directions are changed by the second switching engine 481 can be output through the output ports. The third arrangement condition in this embodiment is that a quantity of second switching regions along the first direction X is less than or equal to the first quantity and a quantity of second switching regions along the third direction Z is less than or equal to the second quantity. For a description of the first quantity and the second quantity, refer to the foregoing description of the first arrangement condition. Details are not described again. For example, if the plurality of second switching regions are arranged in a manner of four rows and five columns on the first switching engine, the plurality of output ports are also arranged in the manner of four rows and five columns in the output port array.

Wavelengths of the plurality of second sub-wavelength light beams received by the second switching regions in this embodiment are all different, or all the same, or partially the same. For a specific description, refer to the foregoing description of the wavelengths of the plurality of second sub-wavelength light beams received by the first switching regions. Details are not described again.

The second switching engine 481 in this embodiment is configured to change the transmission directions of the second sub-wavelength light beams along the wavelength plane ZY and/or the port plane XY. In this embodiment, the optical switching apparatus switches transmission directions of light beams by using the first switching engine 404 and the second switching engine 481 included in the optical switching apparatus. In this case, still refer to FIG. 4. FIG. 4 is an example diagram of a structure of an embodiment of the input port array and the output port array according to this application.

After being switched by the optical switching apparatus, the first light beams obtained by the input ports included in the input port array 400 shown in FIG. 4 are output from the output port array 600. The output port array 600 in this embodiment includes a plurality of output ports, for example, output ports 621, 622, 623, and 624. For a description of arrangement of the plurality of output ports, refer to the foregoing description of arrangement of the plurality of input ports. Details are not described again. In this embodiment, an example in which the plurality of input ports included in the input port array 400 and the plurality of output ports included in the output port array 600 are arranged in a same manner is used for description. In another example, the plurality of input ports included in the input port array 400 and the plurality of output ports included in the output port array 600 may alternatively be arranged in different manners. Specifically, details are not described in this embodiment.

A sub-wavelength light beam *λ*M of the first light beam obtained by the input port 611 is used as an example. If the sub-wavelength light beam *λ*M needs to be output through the output port 624 of the output port array, in this case, the output port 624 in this example needs to perform transmission direction deflection along both the wavelength plane ZY and the port plane XY relative to the input port 611, to ensure that the sub-wavelength light beam *λ*M can be input through the input port 611 and then output through the output port 624.

Therefore, in this embodiment, transmission direction deflection is implemented on the sub-wavelength light beam *λ*M along the wavelength plane ZY and the port plane XY. For example, in the first switching engine and the second switching engine included in the optical switching apparatus, one switching engine can change a transmission direction of the sub-wavelength light beam *λ*M along both the wavelength plane ZY and the port plane XY, and the other switching engine can change the transmission direction of the sub-wavelength light beam *λ*M along at least one of the wavelength plane ZY and the port plane XY. For details about this example, refer to the following Manner 1, Manner 2, Manner 3, Manner 4, and Manner 6.

For another example, in the first switching engine and the second switching engine included in the optical switching apparatus, different switching engines change the transmission direction of the sub-wavelength light beam *λ*M along different planes. For details of this example, refer to the following Manner 5 and Manner 7.

### Manner 1

When the sub-wavelength light beam *λ*M is incident on the first switching engine 404, the first switching engine 404 changes the transmission direction of the sub-wavelength light beam *λ*M along both the wavelength plane ZY and the port plane XY. When the sub-wavelength light beam *λ*M is incident on the second switching engine 481, the second switching engine 481 changes the transmission direction of the sub-wavelength light beam *λ*M along the wavelength plane ZY.

It can be learned that, both the first switching engine 404 and the second switching engine 481 are used to change the transmission direction of the sub-wavelength light beam *λ*M along the wavelength plane ZY, and the first switching engine 404 is used to change the transmission direction of the sub-wavelength light beam *λ*M along the port plane XY, to ensure that the sub-wavelength light beam *λ*M can be output through the output port 624.

### Manner 2

When the sub-wavelength light beam *λ*M is incident on the first switching engine 404, the first switching engine 404 changes the transmission direction of the sub-wavelength light beam *λ*M along both the wavelength plane ZY and the port plane XY. When the sub-wavelength light beam *λ*M is incident on the second switching engine 481, the second switching engine 481 changes the transmission direction of the sub-wavelength light beam *λ*M along the port plane XY.

It can be learned that, both the first switching engine 404 and the second switching engine 481 are used to change the transmission direction of the sub-wavelength light beam *λ*M along the port plane XY, and only the first switching engine 404 is used to change the transmission direction of the sub-wavelength light beam *λ*M along the wavelength plane ZY, to ensure that the sub-wavelength light beam *λ*M can be output through the output port 624.

### Manner 3

When the sub-wavelength light beam *λ*M is incident on the first switching engine 404, the first switching engine 404 changes the transmission direction of the sub-wavelength light beam *λ*M along both the wavelength plane ZY and the port plane XY. When the sub-wavelength light beam *λ*M is incident on the second switching engine 481, the second switching engine 481 changes the transmission direction of the sub-wavelength light beam *λ*M along both the wavelength plane ZY and the port plane XY.

It can be learned that, both the first switching engine 404 and the second switching engine 481 are used to change the transmission direction of the sub-wavelength light beam *λ*M along the port plane XY, and both the first switching engine 404 and the second switching engine 481 can be further used to change the transmission direction of the sub-wavelength light beam *λ*M along the port plane XY, to ensure that the sub-wavelength light beam *λ*M can be output through the output port 624.

### Manner 4

When the sub-wavelength light beam *λ*M is incident on the first switching engine 404, the first switching engine 404 changes the transmission direction of the sub-wavelength light beam *λ*M along the wavelength plane ZY. When the sub-wavelength light beam *λ*M is incident on the second switching engine 481, the second switching engine 481 changes the transmission direction of the sub-wavelength light beam *λ*M along both the wavelength plane ZY and the port plane XY.

It can be learned that, both the first switching engine 404 and the second switching engine 481 are used to change the transmission direction of the sub-wavelength light beam *λ*M along the wavelength plane ZY, and the second switching engine 481 is used to change the transmission direction of the sub-wavelength light beam *λ*M along the port plane XY, to ensure that the sub-wavelength light beam *λ*M can be output through the output port 624.

### Manner 5

When the sub-wavelength light beam *λ*M is incident on the first switching engine 404, the first switching engine 404 changes the transmission direction of the sub-wavelength light beam *λ*M along the wavelength plane ZY. When the sub-wavelength light beam *λ*M is incident on the second switching engine 481, the second switching engine 481 changes the transmission direction of the sub-wavelength light beam *λ*M along the port plane XY.

It can be learned that, the first switching engine 404 is used to change the transmission direction of the sub-wavelength light beam *λ*M along the wavelength plane ZY, and the second switching engine 481 is used to change the transmission direction of the sub-wavelength light beam *λ*M along the port plane XY, to ensure that the sub-wavelength light beam *λ*M can be output through the output port 624.

### Manner 6

When the sub-wavelength light beam *λ*M is incident on the first switching engine 404, the first switching engine 404 changes the transmission direction of the sub-wavelength light beam *λ*M along the port plane XY. In a case that a sub-wavelength light beam *λ*M is incident on the second switching engine 481, the second switching engine 481 changes the transmission direction of the sub-wavelength light beam *λ*M along the port plane XY and the wavelength plane ZY.

It can be learned that, the first switching engine 404 is used to change the transmission direction of the sub-wavelength light beam *λ*M along the port plane XY, and the second switching engine 481 is used to change the transmission direction of the sub-wavelength light beam *λ*M along the port plane XY and the wavelength plane ZY, to ensure that the sub-wavelength light beam *λ*M can be output through the output port 624.

### Manner 7

When the sub-wavelength light beam *λ*M is incident on the first switching engine 404, the first switching engine 404 changes the transmission direction of the sub-wavelength light beam *λ*M along the port plane XY. When the sub-wavelength light beam *λ*M is incident on the second switching engine 481, the second switching engine 481 changes the transmission direction of the sub-wavelength light beam *λ*M along the wavelength plane ZY.

It can be learned that, the first switching engine 404 is used to change the transmission direction of the sub-wavelength light beam *λ*M along the port plane XY, and the second switching engine 481 is used to change the transmission direction of the sub-wavelength light beam *λ*M along the wavelength plane ZY, to ensure that the sub-wavelength light beam AM can be output through the output port 624.

In this embodiment, an example of any sub-wavelength light beam *λ*M of any first light beam is used for description. A process in which the optical switching apparatus performs switching on any sub-wavelength light beam included in any first light beam obtained by an input port for being transmitted to any output port is not described in detail. It should be noted that, the foregoing describes an example in which the optical switching apparatus needs to change the transmission direction of the sub-wavelength light beam *λ*M along the port plane XY, and further needs to change the transmission direction along the wavelength plane ZY. In another example, the optical switching apparatus may alternatively change the transmission direction of the sub-wavelength light beam *λ*M only along the port plane XY. For still another example, the optical switching apparatus may alternatively change the transmission direction of the sub-wavelength light beam *λ*M only along the wavelength plane ZY.

The following describes a process of transmitting the second sub-wavelength light beams emitted from the second dispersion member 409 to the second switching engine 481.

A fifth lens group 482 is further arranged between the second dispersion member 409 and the second switching engine 481 in this embodiment, and the fifth lens group 482 includes an odd quantity of lenses. The fifth lens group 482 is configured to converge the plurality of second sub-wavelength light beams on the second switching engine 481. The second dispersion member 409 is located at a location of an equivalent front focus of the fifth lens group 482, and the second switching engine 481 is located at a location of an equivalent back focus of the fifth lens group 482. A distance between the second dispersion member 409 and the fifth lens group 482 and a distance between the second switching engine 481 and the fifth lens group 482 are both equal to an equivalent focal length of the fifth lens group 482.

The fifth lens group 482 in this embodiment includes the odd quantity of lenses. To be specific, the second sub-wavelength light beams in this embodiment are converged on the second switching engine 481 after switching of an even quantity of focal lengths of the odd quantity of lenses included in the fifth lens group 482.

Optionally, the fifth lens group 482 in this embodiment meets the curvature condition. For a description of the curvature condition, refer to the description of the second lens group 403 meeting the curvature condition. Details are not described again.

After the second switching engine 481 changes the transmission directions of the second sub-wavelength light beams, the second sub-wavelength light beams are emitted from the second switching engine 481 in a direction perpendicular to the second switching engine 481. The second sub-wavelength light beams are controlled to be emitted at angles perpendicular to the second switching engine 481, so that coupling efficiency of coupling the second sub-wavelength light beams to the output ports can be effectively ensured, and optical power loss in a process of outputting the second sub-wavelength light beams from the output ports can be reduced. It should be noted that, in this embodiment, an example in which the second sub-wavelength light beams are emitted at the angles perpendicular to the second switching engine 481 is used for description. In another example, the second sub-wavelength light beams may be emitted from the second switching engine 481 at any angle.

A sixth lens group 484 is included between the second switching engine 481 and the second beam combining member 483 in this embodiment, and the sixth lens group 484 includes an odd quantity of lenses. The sixth lens group 484 is configured to converge the plurality of second sub-wavelength light beams on the second beam combining member 483. The second switching engine 481 is located at a location of an equivalent front focus of the sixth lens group 484, and the second beam combining member 483 is located at a location of an equivalent back focus of the sixth lens group 484. A distance between the second switching engine 481 and the sixth lens group 484 and a distance between the second beam combining member 483 and the sixth lens group 484 are both equal to an equivalent focal length of the sixth lens group 484.

The sixth lens group 484 in this embodiment includes the odd quantity of lenses. To be specific, the second sub-wavelength light beams in this embodiment are converged on the second beam combining member 483 after switching of an even quantity of focal lengths of the odd quantity of lenses included in the sixth lens group 484.

Optionally, the sixth lens group 484 in this embodiment meets the curvature condition. For a description of the curvature condition, refer to the description of the second lens group 403 meeting the curvature condition. Details are not described again.

When the second beam combining regions of the second beam combining member 483 receive the plurality of second sub-wavelength light beams from the sixth lens group 484, the second beam combining regions are configured to perform beam combining on the plurality of second sub-wavelength light beams to form third light beams. It can be learned that, a quantity of the third light beams emitted from the second beam combining member 483 in this embodiment is equal to a quantity of second beam combining regions included in the second beam combining member 483. In this embodiment, an arrangement manner of the second beam combining regions included in the second beam combining member 483 and an arrangement manner of the output ports included in the optical switching apparatus need to meet a fourth arrangement condition, to ensure that a plurality of third light beams emitted after beam combining by the second beam combining member 483 can be output through the output ports.

The fourth arrangement condition in this embodiment is that a quantity of second beam combining regions along the first direction X is less than or equal to the first quantity and a quantity of second beam combining regions along the third direction Z is less than or equal to the second quantity. For a description of the first quantity and the second quantity, refer to the foregoing description of the first arrangement condition. Details are not described again. For example, if the plurality of second beam combining regions are arranged in a manner of four rows and five columns on the second beam combining member 483, the plurality of output ports are also arranged in the manner of four rows and five columns in the output port array.

The second beam combining member 483 is configured to output a plurality of third light beams after beam combining to corresponding output ports included in the output port array 600.

A seventh lens group 485 is further included between the second beam combining member 483 and the output port array 600 in this embodiment, and the seventh lens group 485 includes an odd quantity of lenses. The seventh lens group 485 is configured to converge the plurality of third light beams on the output ports, to output the third light beams from the optical switching apparatus. The second beam combining member 483 is located at a location of an equivalent front focus of the seventh lens group 485, and the output ports are located at a location of an equivalent back focus of the seventh lens group 485. A distance between the second beam combining member 483 and the output ports and a distance between the output ports and the seventh lens group 485 are both equal to an equivalent focal length of the seventh lens group 485.

Optionally, the seventh lens group 485 in this embodiment meets the curvature condition. For a description of the curvature condition, refer to the description of the second lens group 403 meeting the curvature condition. Details are not described again.

The seventh lens group 485 in this embodiment includes the odd quantity of lenses. To be specific, the third light beams in this embodiment are converged on corresponding output ports after switching of an even quantity of focal lengths of the odd quantity of lenses included in the seventh lens group 485. For example, the second beam combining member 483 includes two rows and two columns of second beam combining regions, and the output port array 600 also includes two rows and two columns of output ports. In this case, four third light beams output from the two rows and two columns of second beam combining regions are converged by the seventh lens group 485 on the four output ports in two rows and two columns, to ensure that the output ports can successfully output the third light beams from the optical switching apparatus.

By using the optical switching apparatus in this embodiment, a transmission direction of at least one sub-wavelength light beam of the first light beams obtained by the input ports can be changed along the port plane XY and the wavelength plane ZY, and deflection of the transmission direction along the port plane XY and along the wavelength plane ZY can be implemented. It is ensured that the optical switching apparatus in this embodiment can switch, to an output port at any location included in the output port array, a sub-wavelength light beam obtained by an input port at any location of the input port array, thereby implementing deflection of the sub-wavelength light beam along any direction, and effectively avoiding a disadvantage that a quantity of the input ports and a quantity of the output ports included in the optical switching apparatus are limited. In this embodiment, the transmission direction of the sub-wavelength light beam may be changed for a plurality of times, thereby reducing insertion loss of changing the transmission direction of the sub-wavelength light beam and improving accuracy of switching the transmission direction of the light beam.

### Embodiment 2

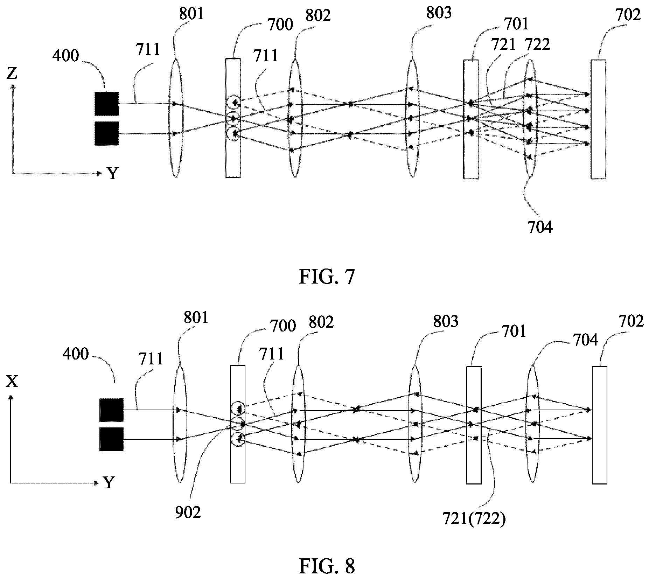

To improve utilization of optical components, reduce an overall size of the optical switching apparatus, and improve space utilization of the optical switching apparatus in a process in which the optical switching apparatus deflects transmission directions of light beams, a structure of an optical switching apparatus in this embodiment may be shown in FIG. 7 and FIG. 8. FIG. 7 is a schematic diagram of a structure of the optical switching apparatus along a wavelength plane, and FIG. 8 is a schematic diagram of a structure of the optical switching apparatus along a port plane. For descriptions of the wavelength plane and the port plane in this embodiment, refer to Embodiment 1. Details are not described in this embodiment.

A difference between the optical switching apparatus in this embodiment and the optical switching apparatus in Embodiment 1 lies in that a grating 701 included in the optical switching apparatus in this embodiment implements all functions of the first dispersion member, the second dispersion member, the first beam combining member, and the second beam combining member in Embodiment 1. A switching engine 702 included in the optical switching apparatus in this embodiment can implement functions of both the first switching engine and the second switching engine in Embodiment 1.

The following describes optical components included in the optical switching apparatus in this embodiment one by one.

The optical switching apparatus in this embodiment includes an input port array 400. For a specific description of the input port array 400 in this embodiment, refer to Embodiment 1. Details are not described in this embodiment.

The optical switching apparatus in this embodiment further includes a switching and separation module 700, and a converging lens group 801 is further included between the switching and separation module 700 and the input port array 400. The converging lens group 801 in this embodiment includes an odd quantity of lenses. The converging lens group 801 is configured to converge a plurality of first light beams on a first transmission region included in the switching and separation module 700 in the wavelength plane ZY and the port plane XY.

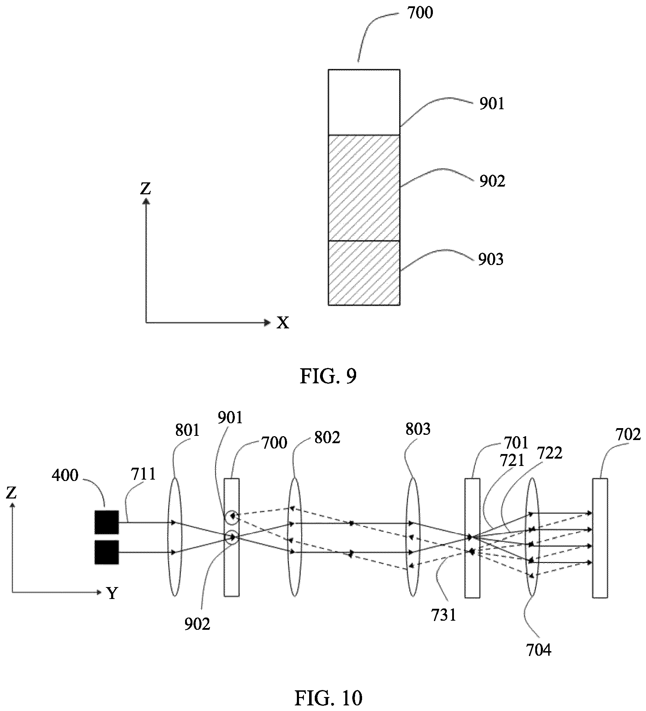

FIG. 9 is an example diagram of a structure of an embodiment of the switching and separation module according to this application. The switching and separation module 700 in this embodiment includes a first transmission region 902. The first transmission region 902 of the switching and separation module 700 receives the first light beams from input ports. The first transmission region 902 in this embodiment is configured to transmit the first light beams in a transmission manner. It can be learned that when the first light beams are transmitted to the first transmission region 902, the first transmission region 902 can transmit the first light beams in the transmission manner, to ensure that the first light beams can be transmitted to the grating 701.

The optical switching apparatus in this embodiment further includes a lens group 802 and a lens group 803. This embodiment is described by using an example in which the lens group 802 and the lens group 803 form the second lens group in Embodiment 1. For a specific description of the second lens group, refer to Embodiment 1. Details are not described in this embodiment. It should be noted that, in this embodiment, an odd quantity of lenses are included between the input port array 400 and the grating 701 to form the second lens group.

It can be learned that the second lens group in this embodiment is configured to converge the first light beams on the grating 701. A quantity of the first light beams is not limited in this embodiment. For example, still as shown in FIG. 4, if the input port array includes four input ports, a quantity of the first light beams in this embodiment is four. With reference to FIG. 4 and FIG. 7, along the wavelength plane ZY, transmission directions of first light beams from an input port 611 and an input port 614 are in a transmission state of a same direction, and transmission directions of first light beams from an input port 612 and an input port 613 are in a transmission state of a same direction. Transmission directions of a first light beam from the input port 611 and a first light beam from the input port 612 are in a separated state.

With reference to FIG. 4 and FIG. 8, along the port plane XY, the transmission directions of the first light beam from the input port 611 and the first light beam from the input port 612 are in a transmission state of a same direction. Transmission directions of a first light beam from the input port 614 and a first light beam from the input port 613 are in a transmission state of a same direction. Transmission directions of the first light beam from the input port 611 and the first light beam from the input port 614 are in a separated state.

With reference to FIG. 7, FIG. 8, and FIG. 10, the following describes a transmission process of first light beams obtained by the input port array 400 in the optical switching apparatus. FIG. 10 is a schematic diagram of optical path transmission in a process of converting the first light beams into second light beams.

In this embodiment, one first light beam is used as an example for description. The first light beam is a first light beam 711 shown in FIG. 7, FIG. 8, and FIG. 10. The first light beam 711 may be a first light beam input by any input port included in the input port array. For a description of a process in which the optical switching apparatus deflects a transmission direction of another first light beam, refer to the description of deflection of the first light beam 711. Details are not described again.

The grating 701 separately decomposes the first light beams to form a plurality of first sub-wavelength light beams. For example, the grating 701 decomposes the first light beam 711 to form a first sub-wavelength light beam 721 and a first sub-wavelength light beam 722, and transmission directions of the first sub-wavelength light beam 721 and the first sub-wavelength light beam 722 are in a separated state in the wavelength plane ZY. The transmission directions of the first sub-wavelength light beam 721 and the first sub-wavelength light beam 722 in the port plane XY are in an overlapping state. For a description of the grating 701 decomposing the first light beams to form the plurality of first sub-wavelength light beams, refer to a specific process of the first dispersion member 402 decomposing the first light beams to form the plurality of first sub-wavelength light beams in Embodiment 1. Details are not described again.

The optical switching apparatus in this embodiment further includes a lens group 704 located between the grating 701 and the switching engine 702. For a related description of the lens group 704 in this embodiment, refer to the description of the third lens group 405 in Embodiment 1. Details are not described again. It can be learned that, the lens group 704 in this embodiment is configured to make the plurality of first sub-wavelength light beams (for example, the first sub-wavelength light beam 721 and the first sub-wavelength light beam 722) incident on the switching engine 702 in the wavelength plane ZY and the port plane XY in a direction perpendicular to the switching engine 702 and a direction in which the plurality of first sub-wavelength light beams are parallel to each other.

In this embodiment, when receiving the first sub-wavelength light beams (for example, the first sub-wavelength light beam 721 and the first sub-wavelength light beam 722), the switching engine 702 may change transmission directions of the first sub-wavelength light beams along the wavelength plane ZY and/or the port plane XY, to ensure that first sub-wavelength light beams emitted from different first switching regions of the switching engine 702 can be incident on different first beam combining regions included in the grating 701. For a description of the switching engine 702 changing the transmission directions of the first sub-wavelength light beams, refer to the description of the first switching engine 404 changing the transmission directions of the first sub-wavelength light beams in Embodiment 1. Details are not described again.

The first sub-wavelength light beams emitted from the switching engine 702 are transmitted to the grating 701 through the lens group 704. For a description of the lens group 704, refer to the description of the fourth lens group 407 in Embodiment 1. It can be learned that, the same lens group 704 in this embodiment can implement functions of the third lens group 405 and the fourth lens group 407 in Embodiment 1. The lens group 704 in this embodiment can transmit first sub-wavelength light beams emitted from different first switching regions of the switching engine 702 to different first beam combining regions included in the grating 701, and is configured to converge first sub-wavelength light beams emitted from a same first switching region on a first beam combining region.

For a description of the first beam combining regions included in the grating 701, refer to the description of the first beam combining regions included in the first beam combining member 406 in Embodiment 1. Details are not described again.

When the first beam combining regions of the grating 701 receive the plurality of first sub-wavelength light beams from the lens group 704, the first beam combining regions are configured to perform beam combining on the plurality of first sub-wavelength light beams to form the second light beams. For example, in this embodiment, a second light beam emitted from a first beam combining region of the grating 701 is a second light beam 731.

The grating 701 is configured to make a plurality of second light beams incident on the lens group 803 and the lens group 802 sequentially. The lens group 803 and the lens group 802 form the first lens group 408 in Embodiment 1, so that the lens group 803 and the lens group 802 can implement a function of the first lens group 408 in Embodiment 1. For a specific description, refer to the description in Embodiment 1. Details are not described again. It can be learned that, the lens group 803 and the lens group 802 in this embodiment are configured to converge the second light beams on a reflection region 901 of the switching and separation module 700. As in FIG. 9, the switching and separation module 700 in this embodiment includes the reflection region 901. It can be learned that, the reflection region 901 and the first transmission region 902 that are included in the switching and separation module 700 are located at different locations. The reflection region 901 of the switching and separation module 700 is configured to receive the second light beams, and is configured to transmit the second light beams in a reflection manner. It can be learned that, when the second light beams are transmitted to the reflection region 901, the reflection region 901 can re-transmit the second light beams to the optical switching apparatus in the reflection manner, to ensure that the second light beams can be transmitted to the grating 701.

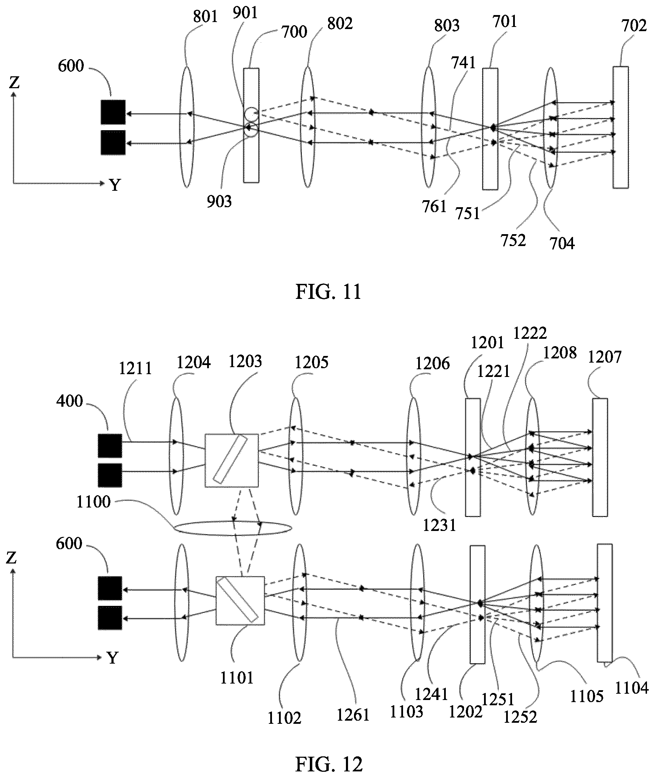

For transmission directions of the second light beams in the optical switching apparatus, refer to FIG. 7, FIG. 8, and FIG. 11. FIG. 11 is an example diagram of a structure of this embodiment of the optical switching apparatus along the port plane according to this application. It can be learned that, the plurality of second light beams reflected by the reflection region 901 can be converged on the grating 701 after sequentially passing through the lens group 802 and the lens group 803. For a description of functions of the lens group 802 and the lens group 803, refer to the description of the first lens group 408 in Embodiment 1. Details are not described again.

The grating 701 receives the second light beams from the lens group 802 and the lens group 803 and decomposes the second light beams to emit a plurality of second sub-wavelength light beams. For example, the grating 701 decomposes a second light beam 741 to form a second sub-wavelength light beam 751 and a second sub-wavelength light beam 752. For a description of the grating 701 decomposing the second light beams to form the plurality of second sub-wavelength light beams, refer to a specific process of the second dispersion member 409 decomposing the second light beams to form the plurality of second sub-wavelength light beams in Embodiment 1. Details are not described again.

The optical switching apparatus in this embodiment further includes the lens group 704 located between the grating 701 and the switching engine 702. For the lens group 704, refer to the related description of the fifth lens group 482 in Embodiment 1. Details are not described again. It can be learned that, the lens group 704 is configured to converge the plurality of second sub-wavelength light beams on the switching engine 702. After receiving the second sub-wavelength light beams, the switching engine 702 may change transmission directions of the second sub-wavelength light beams along the wavelength plane ZY and/or the port plane XY. In addition, after the switching engine 702 changes the transmission directions of the second sub-wavelength light beams, the second sub-wavelength light beams are emitted from the switching engine 702 in the direction perpendicular to the switching engine 702. For a specific description, refer to the description of the second switching engine 481 in Embodiment 1. Details are not described again.

For the lens group 704 in this embodiment, refer to the related description. For details, refer to the related description of the sixth lens group 484 in Embodiment 1. Details are not described again. It can be learned that, the lens group 704 in this embodiment is configured to converge the plurality of second sub-wavelength light beams on the grating 701. When second beam combining regions of the grating 701 receive the plurality of second sub-wavelength light beams, the second beam combining regions are configured to perform beam combining on the plurality of second sub-wavelength light beams to form third light beams. It can be learned that, a quantity of the third light beams emitted from the grating 701 in this embodiment is equal to a quantity of the second beam combining regions included in the grating 701. For a description of performing beam combining on the second sub-wavelength light beams converged on the grating 701 to form the third light beams, refer to the description of the second beam combining member 483 in Embodiment 1. Details are not described again. For example, a third light beam may be a third light beam 761 shown in FIG. 11.

The lens group 803 and the lens group 802 form the seventh lens group 485 in Embodiment 1, and are configured to converge third light beams 706 on a second transmission region included in the switching and separation module 700. As shown in FIG. 9, the switching and separation module 700 in this embodiment includes a second transmission region 903. The second transmission region 903 of the switching and separation module 700 receives the third light beams. The second transmission region 903 in this embodiment is configured to transmit the third light beams in the transmission manner. It can be learned that, when the third light beams are transmitted to the second transmission region 903, the second transmission region 903 can transmit the third light beams to an output port array 600 in the transmission manner.

It can be learned that, locations of the first transmission region 902, the reflection region 901, and the second transmission region 903 that are included in the switching and separation module 700 in this embodiment are different from each other. In this embodiment, an example shown in FIG. 9 is used for description. To be specific, the first transmission region 902, the reflection region 901, and the second transmission region 903 are arranged in a single-column manner. In another example, the first transmission region 902, the reflection region 901, and the second transmission region 903 may be arranged in another form. For example, the first transmission region 902, the reflection region 901, and the second transmission region 903 are arranged in a single-row manner. For another example, the first transmission region 902, the reflection region 901, and the second transmission region 903 are arranged in a staggering manner. In this embodiment, an example in which the surfaces of the first transmission region 902, the reflection region 901, and the second transmission region 903 are of square structures is used. In another example, the first transmission region 902, the reflection region 901, and the second transmission region 903 may be of triangular structures, circular structures, quadrilateral structures, or the like. This is not specifically limited.

The first transmission region 902 and the reflection region 901 in this embodiment are used as an example. The first transmission region 902 may be of a transparent structure, to ensure that an optical signal can be transmitted through transmission of the first transmission region 902. The reflection region 901 may be a reflective film on a surface of the switching and separation module 700, to ensure that the optical signal can be transmitted through reflection of the reflective film.

It can be learned that, by using the optical switching apparatus in this embodiment, a transmission direction of at least one sub-wavelength light beam of the first light beams obtained by the input ports can be changed along the port plane XY and along the wavelength plane ZY, and deflection of the transmission direction of the sub-wavelength light beam along the port plane XY and along the wavelength plane ZY can be implemented. It is ensured that the optical switching apparatus in this embodiment can switch, to an output port at any location included in the output port array, a sub-wavelength light beam obtained by an input port at any location of the input port array, thereby implementing deflection of the sub-wavelength light beam along any direction, and effectively avoiding a disadvantage that the input ports and the output ports included in the optical switching apparatus are limited. In this embodiment, the transmission direction of the sub-wavelength light beam may be changed for a plurality of times, thereby reducing insertion loss of changing the transmission direction of the sub-wavelength light beam and improving accuracy of switching the transmission direction of the light beam.

In addition, in a process in which the optical switching apparatus in this embodiment deflects transmission directions of light beams, only one grating is used to implement a process of decomposing the first light beams to form the plurality of first sub-wavelength light beams, a process of performing beam combining on the plurality of first sub-wavelength light beams to form second light beams, a process of decomposing the second light beams to form the plurality of second sub-wavelength light beams, and a function of performing beam combining on the plurality of second sub-wavelength light beams to form the third light beams. In addition, the optical switching apparatus in this embodiment can deflect the transmission directions of the first sub-wavelength light beams by using only one switching apparatus, and can further deflect the transmission directions of the second sub-wavelength light beams, thereby improving utilization of the optical components, reducing an overall volume of the optical switching apparatus, and improving space utilization of the optical switching apparatus.

### Embodiment 3

By using an optical switching apparatus in this embodiment, not forming part of the claimed invention, it can be ensured that output third light beams can be accurately transmitted to an output port array, thereby effectively ensuring separation of transmission directions of first light beams and transmission directions of third light beams, and improving deflection accuracy of transmission directions of light beams.

For a structure of the optical switching apparatus in this embodiment, refer to FIG. 12. FIG. 12 is a schematic diagram of a structure of the optical switching apparatus along a wavelength plane. For descriptions of the wavelength plane and a port plane in this embodiment, refer to Embodiment 1. Details are not described in this embodiment.

A difference between the optical switching apparatus in this embodiment and the optical switching apparatus in Embodiment 1 lies in that a first grating 1201 included in the optical switching apparatus in this embodiment can implement functions of both the first dispersion member and the first beam combining member in Embodiment 1. A second grating 1202 included in the optical switching apparatus in this embodiment can implement functions of both the second dispersion member and the second beam combining member in Embodiment 1.

The following describes optical components included in the optical switching apparatus in this embodiment one by one.

The optical switching apparatus in this embodiment includes an input port array 400. For a specific description of the input port array 400 in this embodiment, refer to Embodiment 1. Details are not described in this embodiment.

The optical switching apparatus in this embodiment further includes a first switching and separation module 1203, and a converging lens group 1204 is further included between the first switching and separation module 1203 and the input port array 400. The converging lens group 1204 in this embodiment includes an odd quantity of lenses. The converging lens group 1204 is configured to converge, in the wavelength plane ZY and the port plane XY, a plurality of first light beams to a transmission region included in the first switching and separation module 1203. For a specific description of the converging lens group 1204 in this embodiment, refer to the description of the converging lens group 801 in Embodiment 2. Details are not described again.

The transmission region included in the first switching and separation module 1203 is configured to receive the first light beams from the input port array 400, and transmit the first light beams in a transmission manner. It can be learned that, when the first light beams are transmitted to the transmission region of the first switching and separation module 1203, the transmission region can transmit the first light beams in the transmission manner, to ensure that the first light beams can be transmitted to the first grating 1201. For a description of the transmission region of the first switching and separation module 1203 in this embodiment, refer to the description of the first transmission region 902 of the switching and separation module 700 in Embodiment 2. Details are not described again.

The optical switching apparatus in this embodiment further includes a lens group 1205 and a lens group 1206. This embodiment is described by using an example in which the lens group 1205 and the lens group 1206 form the second lens group in Embodiment 1. For a specific description of the second lens group, refer to Embodiment 1. Details are not described in this embodiment. It should be noted that, in this embodiment, an odd quantity of lenses are included between the input port array 400 and the first grating 1201 to form the second lens group.

It can be learned that the second lens group in this embodiment is configured to converge the first light beams on the first grating 1201. A quantity of the first light beams is not limited in this embodiment. For a specific description of transmitting the first light beams to the first grating 1201, refer to the description of transmitting the first light beams to the grating 701 in Embodiment 2. Details are not described again.

In this embodiment, one first light beam is used as an example for description. For example, the first light beam is a first light beam 1211 shown in FIG. 12. The first light beam 1211 may be a first light beam input by any input port included in the input port array. For a description of a process in which the optical switching apparatus deflects a transmission direction of another first light beam, refer to the description of deflection of the first light beam 1211. Details are not described again.

The first grating 1201 separately decomposes the first light beams to form a plurality of first sub-wavelength light beams. For example, the first grating 1201 decomposes the first light beam 1211 to form a first sub-wavelength light beam 1221 and a first sub-wavelength light beam 1222. For a description of a specific process, refer to the description of the process in which the grating 701 decomposes the first light beams to form the plurality of first sub-wavelength light beams in Embodiment 2. Details are not described again.

The optical switching apparatus in this embodiment further includes a lens group 1208 located between the first grating 1201 and a first switching engine 1207. For a related description of the lens group 1208 in this embodiment, refer to the description of the third lens group 405 in Embodiment 1. Details are not described again. It can be learned that, the lens group 1208 in this embodiment is configured to make the plurality of first sub-wavelength light beams (for example, the first sub-wavelength light beam 1221 and the first sub-wavelength light beam 1222) incident on the first switching engine 1207 in the wavelength plane ZY and the port plane XY in a direction perpendicular to the first switching engine 1207 and a direction in which the plurality of first sub-wavelength light beams are parallel to each other.

In this embodiment, when receiving the first sub-wavelength light beams (for example, the first sub-wavelength light beam 1221 and the first sub-wavelength light beam 1222), the first switching engine 1207 may change transmission directions of the first sub-wavelength light beams along the wavelength plane ZY and/or the port plane XY, to ensure that different first switching regions of the first switching engine 1207 can be incident on different first beam combining regions included in the first grating 1201. For a description of the first switching engine 1207 changing the transmission directions of the first sub-wavelength light beams, refer to the description of the first switching engine 1207 changing the transmission directions of the first sub-wavelength light beams in Embodiment 1. Details are not described again.

The first sub-wavelength light beams emitted from the first switching engine 1207 are transmitted to the first grating 1201 through the lens group 1208. For a description of the lens group 1208, refer to the description of the fourth lens group 407 in Embodiment 1. It can be learned that, the same lens group 1208 in this embodiment can implement functions of the third lens group 405 and the fourth lens group 407 in Embodiment 1. The lens group 1208 in this embodiment can transmit first sub-wavelength light beams emitted from different first switching regions of the first switching engine 1207 to different first beam combining regions included in the first grating 1201, and is configured to converge first sub-wavelength light beams emitted from a same first switching region on a first beam combining region.

For a description of the first beam combining regions included in the first grating 1201, refer to the description of the first beam combining regions included in the first beam combining member 406 in Embodiment 1. Details are not described again.

When the first beam combining regions of the first grating 1201 receive the plurality of first sub-wavelength light beams from the lens group 1208, the first beam combining regions are configured to perform beam combining on the plurality of first sub-wavelength light beams to form second light beams. For example, in this embodiment, a second light beam emitted from a first beam combining regions of the first grating 1201 is a second light beam 1231.

The first grating 1201 is configured to make a plurality of second light beams incident on the lens group 1206 and the lens group 1205 sequentially. The lens group 1206 and the lens group 1205 form the first lens group 408 in Embodiment 1, so that the lens group 1206 and the lens group 1205 can implement a function of the first lens group 408 in Embodiment 1. For a specific description, refer to the description in Embodiment 1. Details are not described again. It can be learned that, the lens group 1206 and the lens group 1205 in this embodiment are configured to converge the second light beams on a reflection region of the first switching and separation module 1203.

For a specific description of the reflection region included in the first switching and separation module 1203 in this embodiment, refer to Embodiment 2. Details are not described again. It can be learned that, the reflection region and the transmission region that are included in the first switching and separation module 1203 are located at different locations. The reflection region of the first switching and separation module 1203 is configured to receive the second light beams, transmit the second light beams in a reflection manner, and transmit the second light beams to a reflection region of a second switching and separation module 1101. For a specific description of the reflection region included in the second switching and separation module 1101 in this embodiment, refer to the description of the reflection region in Embodiment 2. Details are not described again.

It can be learned that, in the wavelength plane ZY, the reflection region of the first switching and separation module 1203 and the reflection region of the second switching and separation module 1101 face each other, thereby effectively ensuring that when the second light beams from the reflection region of the first switching and separation module 1203 is incident on the reflection region of the second switching and separation module 1101, the second light beams can be successfully transmitted to the reflection region of the second switching and separation module 1101 under reflection effect of the reflection region of the first switching and separation module 1203. Incident angle of the second light beams incident on the reflection region of the first switching and separation module 1203 is not limited in this embodiment, provided that the second light beams can be successfully transmitted to the reflection region of the second switching and separation module 1101.

When the second light beams are transmitted to the reflection region of the second switching and separation module 1101, the reflection region of the second switching and separation module 1101 can re-transmit the second light beams to the optical switching apparatus in the reflection manner, to ensure that the second light beams can be transmitted to the second grating 1202.

A converging lens group is further included between the reflection region of the first switching and separation module 1203 and the reflection region of the second switching and separation module 1101 in this embodiment. The converging lens group in this embodiment is configured to converge the second light beams from the reflection region of the first switching and separation module 1203 on the reflection region of the second switching and separation module 1101.

The plurality of second light beams reflected by the reflection region of the second switching and separation module 1101 can be converged on the second grating 1202 after sequentially passing through a lens group 1102 and a lens group 1103. For a description of functions of the lens group 1102 and the lens group 1103, refer to the description of the first lens group 408 in Embodiment 1. Details are not described again.

The second grating 1202 receives the second light beams from the lens group 1102 and the lens group 1103 and decomposes the second light beams to emit a plurality of second sub-wavelength light beams. For example, the second grating 1202 decomposes a second light beam 1241 to form a second sub-wavelength light beam 1251 and a second sub-wavelength light beam 1252. For a description of the second grating 1202 decomposing the second light beams to form the plurality of second sub-wavelength light beams, refer to a specific process of the second dispersion member 409 decomposing the second light beams to form the plurality of second sub-wavelength light beams in Embodiment 1. Details are not described again.

The optical switching apparatus in this embodiment further includes a lens group 1105 located between the second grating 1202 and a second switching engine 1104. For the lens group 1105, refer to the related description of the fifth lens group 482 in Embodiment 1. Details are not described again. It can be learned that, the lens group 1105 is configured to converge the plurality of second sub-wavelength light beams on the second switching engine 1104. After receiving the second sub-wavelength light beams, the second switching engine 1104 may change transmission directions of the second sub-wavelength light beams along the wavelength plane ZY and/or the port plane XY. In addition, after the second switching engine 1104 changes the transmission directions of the second sub-wavelength light beams, the second sub-wavelength light beams are emitted from the second switching engine 1104 in a direction perpendicular to the second switching engine 1104. For a specific description, refer to the description of the second switching engine 481 in Embodiment 1. Details are not described again.

For the lens group 1105 in this embodiment, refer to the related description of the sixth lens group 484 in Embodiment 1. Details are not described again. It can be learned that, the lens group 1105 in this embodiment is configured to converge the plurality of second sub-wavelength light beams on the second grating 1202. When the second beam combining regions of the second grating 1202 receive the plurality of second sub-wavelength light beams, the second beam combining regions are configured to perform beam combining on the plurality of second sub-wavelength light beams to form third light beams. It can be learned that, a quantity of the third light beams emitted from the second grating 1202 in this embodiment is equal to a quantity of second beam combining regions included in the second grating 1202. For a description of performing beam combining on the second sub-wavelength light beams converged on the second grating 1202 to form the third light beams, refer to the description of the second beam combining member 483 in Embodiment 1. Details are not described again. For example, the third light beams may be third light beams 1261 shown in FIG. 12.

The lens group 1103 and the lens group 1102 form the seventh lens group 485 in Embodiment 1, and are configured to converge third light beams 1206 on a transmission region included in the second switching and separation module 1101. For a description of the transmission region included in the second switching and separation module 1101, refer to the description of the transmission region included in the switching and separation module in Embodiment 2. Details are not described again. Specifically, the transmission region of the second switching and separation module 1101 receives the third light beams. The transmission region of the second switching and separation module 1101 in this embodiment is configured to transmit the third light beams in the transmission manner. It can be learned that, when the third light beams are transmitted to the transmission region of the second switching and separation module 1101, the transmission region of the second switching and separation module 1101 can transmit the third light beams to an output port array 600 in the transmission manner.

It can be learned that, in a process in which the optical switching apparatus in this embodiment deflects transmission directions of light beams, only one grating is used to implement a process of decomposing the first light beams to form the plurality of first sub-wavelength light beams and a process of performing beam combining on the plurality of first sub-wavelength light beams to form second light beams. One second grating can be further used to implement a process of decomposing the second light beams to form the plurality of second sub-wavelength light beams, and the second grating can further implement a function of performing beam combining on the plurality of second sub-wavelength light beams to form the third light beams. In this way, utilization of optical components is improved, an overall size of the optical switching apparatus is reduced, and space utilization of the optical switching apparatus is improved.

In addition, the second light beams whose transmission directions are changed by using the first switching engine in this embodiment can be transmitted to the second switching engine by sequentially passing through the first switching and separation module and the second switching and separation module, and then deflected in the transmission directions by using the second switching engine. Because the first light beam is transmitted to the first switching engine by passing through the first switching and separation module, and the third light beams from the second switching engine is output by using the second switching and separation module, it can be ensured that the output third light beams are accurately transmitted to the output port array, so that separation of the transmission directions of the first light beams and the transmission directions of the third light beams is effectively ensured, thereby improving deflection accuracy of transmission directions of light beams.

### Embodiment 4

This embodiment provides an optical switching method, not forming part of the claimed invention. The optical switching method in this embodiment is based on the optical switching apparatus in Embodiment 1. For a specific structure of the optical switching apparatus, refer to the description in Embodiment 1. Details are not described again.

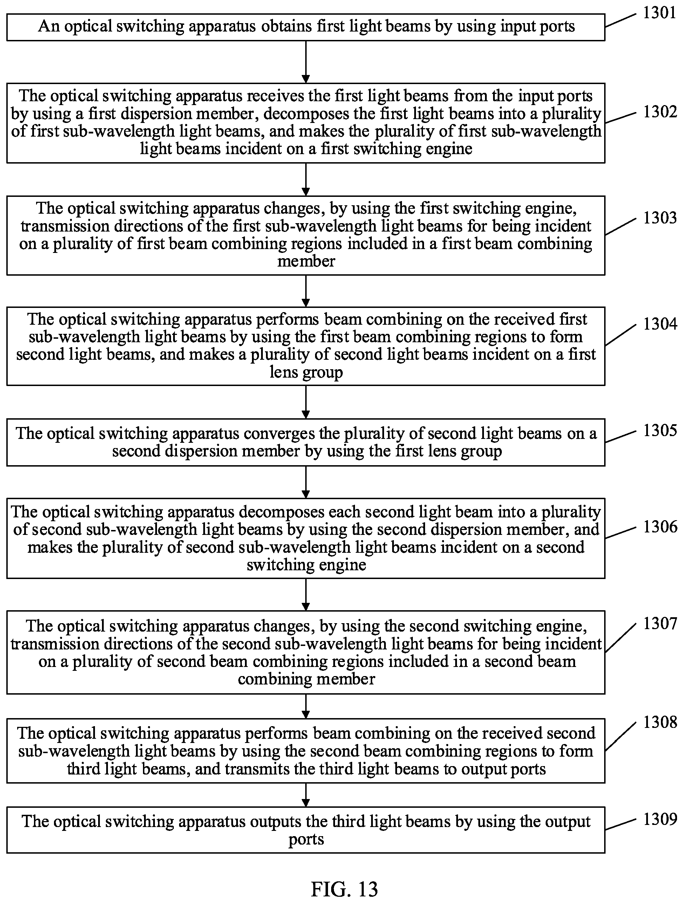

The following describes an example of an execution process of the optical switching method in this embodiment with reference to FIG. 13. FIG. 13 is a flowchart of steps of a first embodiment of the optical switching method according to this application.

Step 1301: The optical switching apparatus obtains first light beams by using the input ports.

Step 1302: The optical switching apparatus receives the first light beams from the input ports by using the first dispersion member, decomposes the first light beams into a plurality of first sub-wavelength light beams, and makes the plurality of first sub-wavelength light beams incident on the first switching engine.

Step 1303: The optical switching apparatus changes, by using the first switching engine, transmission directions of the first sub-wavelength light beams for being incident on the plurality of first beam combining regions included in the first beam combining member.

Step 1304: The optical switching apparatus performs beam combining on the received first sub-wavelength light beams by using the first beam combining regions to form second light beams, and makes a plurality of second light beams incident on the first lens group.

Step 1305: The optical switching apparatus converges the plurality of second light beams on the second dispersion member by using the first lens group.

Step 1306: The optical switching apparatus decomposes each second light beam into a plurality of second sub-wavelength light beams by using the second dispersion member, and makes the plurality of second sub-wavelength light beams incident on the second switching engine.

Step 1307: The optical switching apparatus changes, by using the second switching engine, transmission directions of the second sub-wavelength light beams for being incident on the plurality of second beam combining regions included in the second beam combining member.

The first switching engine and the second switching engine jointly change transmission directions of sub-wavelength light beams along a wavelength plane and a port plane, the wavelength plane and the port plane are perpendicular to each other, and both the wavelength plane and the port plane are parallel to transmission directions of the first light beams.

Step 1308: The optical switching apparatus performs beam combining on the received second sub-wavelength light beams by using the second beam combining regions to form third light beams, and transmits the third light beams to the output ports.

Step 1309: The optical switching apparatus outputs the third light beams by using the output ports.

In a process of the optical switching apparatus implementing the optical switching method in this embodiment, for specific descriptions of the optical components and a description of beneficial effects, refer to Embodiment 1. Details are not described in this embodiment.

### Embodiment 5

This embodiment provides an optical switching method. The optical switching method in this embodiment is based on the optical switching apparatus in Embodiment 2. For a specific structure of the optical switching apparatus, refer to the description in Embodiment 2. Details are not described again.

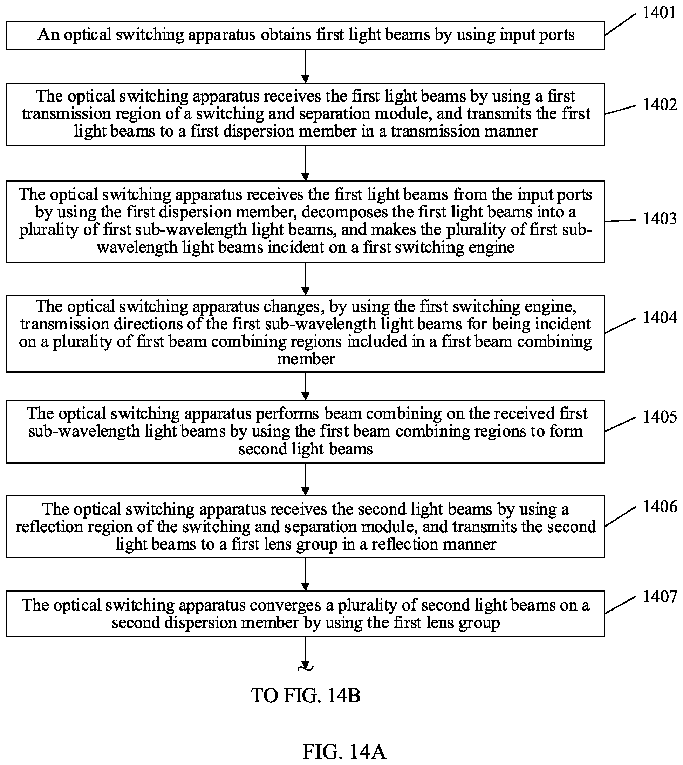

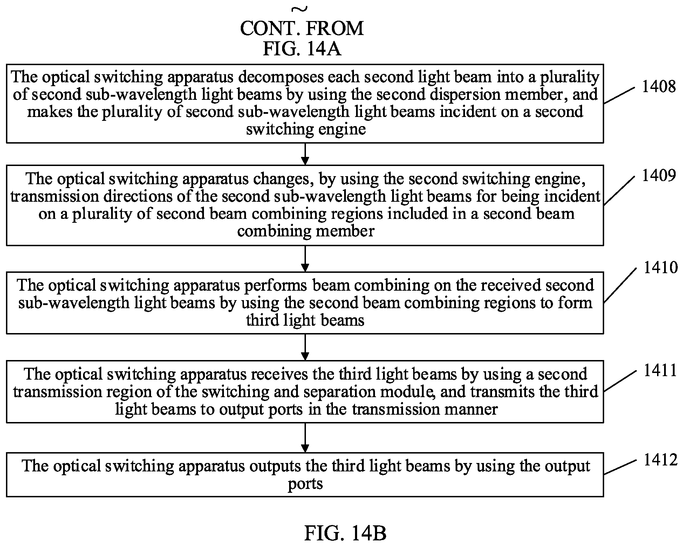

The following describes an example of an execution process of the optical switching method in this embodiment with reference to FIG. 14A and FIG. 14B. FIG. 14A and FIG. 14B are flowcharts of steps of a second embodiment of the optical switching method according to this application.

Step 1401: The optical switching apparatus obtains first light beams by using the input ports.

Step 1402: The optical switching apparatus receives the first light beams by using the first transmission region of the switching and separation module, and transmits the first light beams to the first dispersion member in a transmission manner.

Step 1403: The optical switching apparatus receives the first light beams from the input ports by using the first dispersion member, decomposes the first light beams into a plurality of first sub-wavelength light beams, and makes the plurality of first sub-wavelength light beams incident on the first switching engine.

Step 1404: The optical switching apparatus changes, by using the first switching engine, transmission directions of the first sub-wavelength light beams for being incident on the plurality of first beam combining regions included in the first beam combining member.

Step 1405: The optical switching apparatus performs beam combining on the received first sub-wavelength light beams by using the first beam combining regions to form second light beams.

Step 1406: The optical switching apparatus receives the second light beams by using the reflection region of the switching and separation module, and transmits the second light beams to the first lens group in a reflection manner.

Step 1407: The optical switching apparatus converges a plurality of second light beams on the second dispersion member by using the first lens group.

Step 1408: The optical switching apparatus decomposes each second light beam into a plurality of second sub-wavelength light beams by using the second dispersion member, and makes the plurality of second sub-wavelength light beams incident on the second switching engine.

Step 1409: The optical switching apparatus changes, by using the second switching engine, transmission directions of the second sub-wavelength light beams for being incident on the plurality of second beam combining regions included in the second beam combining member.

The first switching engine and the second switching engine jointly change transmission directions of sub-wavelength light beams along a wavelength plane and a port plane, the wavelength plane and the port plane are perpendicular to each other, and both the wavelength plane and the port plane are parallel to transmission directions of the first light beams.

Step 1410: The optical switching apparatus performs beam combining on the received second sub-wavelength light beams by using the second beam combining regions to form third light beams.

Step 1411: The optical switching apparatus receives the third light beams by using the second transmission region of the switching and separation module, and transmits the third light beams to the output ports in the transmission manner.

Step 1412: The optical switching apparatus outputs the third light beams by using the output ports.

In a process of the optical switching apparatus implementing the optical switching method in this embodiment, for specific descriptions of the optical components and a description of beneficial effects, refer to Embodiment 2. Details are not described in this embodiment.

### Embodiment 6

This embodiment provides an optical switching method, not forming part of the claimed invention. The optical switching method in this embodiment is based on the optical switching apparatus in Embodiment 3. For a specific structure of the optical switching apparatus, refer to the description in Embodiment 3. Details are not described again.

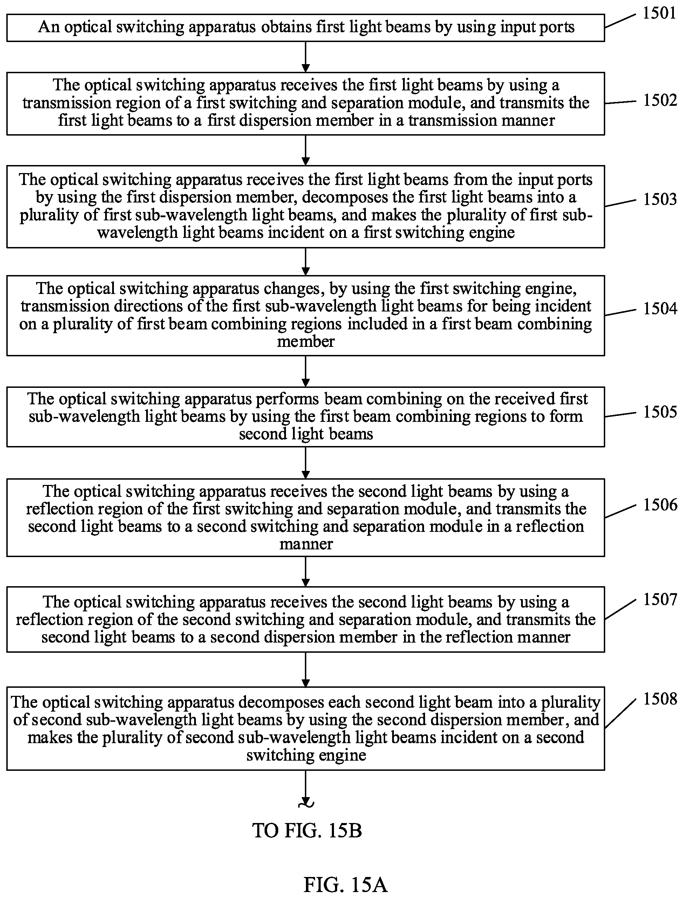

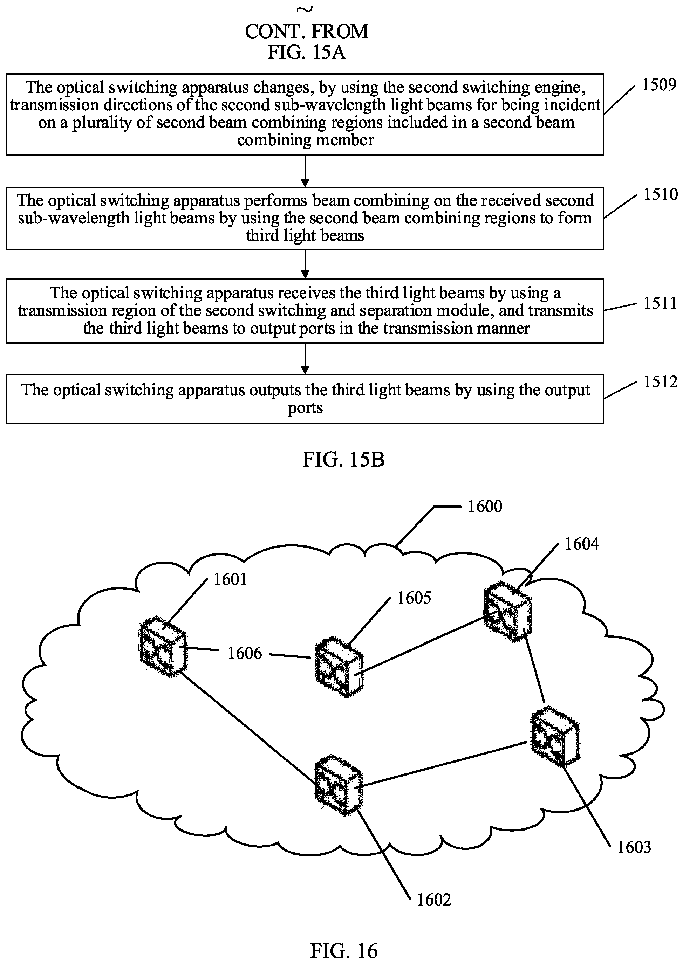

The following describes an example of an execution process of the optical switching method in this embodiment with reference to FIG. 15A and FIG. 15B. FIG. 15A and FIG. 15B are flowcharts of steps of a third embodiment of the optical switching method according to this application.

Step 1501: The optical switching apparatus obtains first light beams by using the input ports.

Step 1502: The optical switching apparatus receives the first light beam by using the transmission region of the first switching and separation module, and transmits the first light beams to the first dispersion member in a transmission manner.

Step 1503: The optical switching apparatus receives the first light beams from the input ports by using the first dispersion member, decomposes the first light beams into a plurality of first sub-wavelength light beams, and makes the plurality of first sub-wavelength light beams incident on the first switching engine.

Step 1504: The optical switching apparatus changes, by using the first switching engine, transmission directions of the first sub-wavelength light beams for being incident on the plurality of first beam combining regions included in the first beam combining member.

Step 1505: The optical switching apparatus performs beam combining on the received first sub-wavelength light beams by using the first beam combining regions to form second light beams.

Step 1506: The optical switching apparatus receives the second light beams by using the reflection region of the first switching and separation module, and transmits the second light beams to the second switching and separation module in a reflection manner.

Step 1507: The optical switching apparatus receives the second light beams by using the reflection region of the second switching and separation module, and transmits the second light beams to the second dispersion member in the reflection manner.

Step 1508: The optical switching apparatus decomposes each second light beam into a plurality of second sub-wavelength light beams by using the second dispersion member, and makes the plurality of second sub-wavelength light beams incident on the second switching engine.

Step 1509: The optical switching apparatus changes, by using the second switching engine, transmission directions of the second sub-wavelength light beams for being incident on the plurality of second beam combining regions included in the second beam combining member.

The first switching engine and the second switching engine jointly change transmission directions of sub-wavelength light beams along a wavelength plane and a port plane, the wavelength plane and the port plane are perpendicular to each other, and both the wavelength plane and the port plane are parallel to transmission directions of the first light beams.

Step 1510: The optical switching apparatus performs beam combining on the received second sub-wavelength light beams by using the second beam combining regions to form third light beams.

Step 1511: The optical switching apparatus receives the third light beams by using the transmission region of the second switching and separation module, and transmits the third light beams to the output ports in the transmission manner.

Step 1512: The optical switching apparatus outputs the third light beams by using the output ports.

In a process of the optical switching apparatus implementing the optical switching method in this embodiment, for specific descriptions of the optical components and a description of beneficial effects, refer to Embodiment 2. Details are not described in this embodiment.

### Embodiment 7

This application further provides an optical communication system. The following describes a structure of the optical communication system 1600 provided in this application with reference to FIG. 16. FIG. 16 is an example diagram of a structure of an embodiment of the optical communication system according to this application.

The optical communication system 1600 includes a plurality of optical nodes. For a description of the optical nodes, refer to FIG. 1a or FIG. 1b. Details are not described again.

As shown in FIG. 16, the optical communication system 1600 in this embodiment includes an optical node 1601, an optical node 1602, an optical node 1603, an optical node 1604, and an optical node 1605. It should be noted that, a description of a quantity of the optical nodes included in the optical communication system 1600 in this embodiment is an optional example, and is not limited.

The optical communication system 1600 further includes an optical fiber connected between two optical nodes. Using the optical node 1601 and the optical node 1605 as an example, the optical communication system 1600 further includes an optical fiber 1606 connected between the optical node 1601 and the optical node 1605. A connection relationship between the plurality of optical nodes included in the optical communication system 1600 is not limited in this embodiment.

The foregoing embodiments are used for describing, instead of limiting the technical solutions of the present invention which is defined by the scope of the claims.

## Claims

1. An optical switching apparatus, wherein the optical switching apparatus comprises input ports (611-614), a first dispersion member (402), a first switching engine (404, 1207), a first beam combining member (406), a first lens group (408), a second dispersion member (409), a second beam combining member (483), a second switching engine (481, 1104), and output ports (621-623), wherein
the input ports (611-614) are configured to obtain first light beams (411);
the first dispersion member (402) is configured to receive the first light beams (411) from the input ports (611-614), and is configured to decompose the first light beams (411) into a plurality of first sub-wavelength light beams, and the first dispersion member (402) is further configured to make the plurality of first sub-wavelength light beams incident on the first switching engine (404, 1207);
the first switching engine (404, 1207) is configured to change transmission directions of the first sub-wavelength light beams for being incident on a plurality of first beam combining regions comprised in the first beam combining member (406);
the first beam combining regions are configured to perform beam combining on the received first sub-wavelength light beams to form second light beams (421, 422, 731, 741, 1231, 1241), and the first beam combining member (406) is configured to make a plurality of second light beams (421, 422, 731, 741, 1231, 1241) incident on the first lens group (408);
the first lens group (408) is configured to converge the plurality of second light beams (421, 422, 731, 741, 1231, 1241) to the second dispersion member (409), wherein the first lens group (408) comprises an odd quantity of lenses;
the second dispersion member (409) is configured to decompose each second light beam (421, 422, 731, 741, 1231, 1241) into a plurality of second sub-wavelength light beams, and the second dispersion member (409) is configured to make the plurality of second sub-wavelength light beams incident on the second switching engine (481, 1104);
the second switching engine (481, 1104) is configured to change transmission directions of the second sub-wavelength light beams for being incident on a plurality of second beam combining regions comprised in the second beam combining member (483), wherein the first switching engine (404, 1207) and the second switching engine (481, 1104) jointly change transmission directions of sub-wavelength light beams along a wavelength plane and a port plane, the wavelength plane and the port plane are perpendicular to each other, and both the wavelength plane and the port plane are parallel to transmission directions of the first light beams (411); and
the second beam combining regions are configured to perform beam combining on the received second sub-wavelength light beams to form third light beams (706, 1206, 1261), and the second beam combining member (483) is configured to transmit the third light beams (706, 1206, 1261) to the output ports (621-623),
**characterized in that** the first dispersion member (402), the second dispersion member (409), the first beam combining member (406), and the second beam combining member (483) are a same grating (701), the first switching engine (404, 1207) and the second switching engine (481, 1104) are a same switching engine (702), and the optical switching apparatus further comprises a switching and separation module (700), wherein
a first transmission region (902) of the switching and separation module is configured to receive the first light beams (411), and is configured to transmit the first light beams (411) to the first dispersion member (402) in a transmission manner;
a reflection region (901) of the switching and separation module is configured to receive the second light beams (421, 422, 731, 741, 1231, 1241), and is configured to transmit the second light beams (421, 422, 731, 741, 1231, 1241) to the first lens group (408) in a reflection manner; and
a second transmission region (903) of the switching and separation module is configured to receive the third light beams (706, 1206, 1261), and is configured to transmit the third light beams (706, 1206, 1261) to the output ports (621-623) in the transmission manner.

2. The optical switching apparatus according to claim 1, wherein at least one lens comprised in the first lens group (408) is configured to converge the plurality of second light beams (421, 422, 731, 741, 1231, 1241) to the second dispersion member (409) along the wavelength plane and/or the port plane.

3. The optical switching apparatus according to claim 1 or 2, wherein a distance between the switching and separation module comprised in the optical switching apparatus and the first lens group (408) is equal to an equivalent focal length of the first lens group (408).

4. The optical switching apparatus according to any one of claims 1 to 3, wherein the optical switching apparatus comprises an input port array (400) and an output port array (600), the input port array (400) comprises a plurality of input ports (611-614) along each of a first direction and a third direction, the output port array (600) comprises a plurality of output ports (621-623) along each of the first direction and the third direction, both the first direction and the third direction are perpendicular to the transmission directions of the first light beams (411), and the first direction and the third direction are perpendicular to each other.

5. The optical switching apparatus according to any one of claims 1 to 4, wherein the optical switching apparatus comprises a first quantity of output ports (621-623) along the first direction, the optical switching apparatus comprises a second quantity of output ports (621-623) along the third direction, and both the first direction and the third direction are perpendicular to the transmission directions of the first light beams (411);
a quantity of first beam combining regions comprised in the first beam combining member (406) along the first direction is less than or equal to the first quantity, and a quantity of first beam combining regions comprised in the first beam combining member (406) along the third direction is less than or equal to the second quantity; and
a quantity of second beam combining regions comprised in the second beam combining member (483) along the first direction is less than or equal to the first quantity, and a quantity of second beam combining regions comprised in the second beam combining member (483) along the third direction is less than or equal to the second quantity.

6. The optical switching apparatus according to any one of claims 1 to 5, wherein the optical switching apparatus comprises a plurality of input ports (611-614), a second lens group (403) is further comprised between the plurality of input ports (611-614) and the first dispersion member (402), and the second lens group (403) comprises an odd quantity of lenses, wherein
the second lens group (403) is configured to make a plurality of first light beams (411) incident on a first region and a second region of the first dispersion member (402) at different incident angles.

7. The optical switching apparatus according to claim 6, wherein the first region and the second region overlap on the first dispersion member (402).

8. The optical switching apparatus according to any one of claims 1 to 7, wherein the first dispersion member (402) is configured to emit different first sub-wavelength light beams at different emission angles.

9. An optical switching method, applied to an optical switching apparatus, wherein the optical switching apparatus comprises input ports (611-614), a first dispersion member (402), a first switching engine (404, 1207), a first beam combining member (406), a first lens group (408), a second dispersion member (409), a second beam combining member (483), a second switching engine (481, 1104), and output ports (621-623), and the method comprises:
obtaining first light beams (411) by using the input ports (611-614);
receiving the first light beams (411) from the input ports (611-614) by using the first dispersion member (402), decomposing the first light beams (411) into a plurality of first sub-wavelength light beams, and making the plurality of first sub-wavelength light beams incident on the first switching engine (404, 1207);
changing, by using the first switching engine (404, 1207), transmission directions of the first sub-wavelength light beams for being incident on a plurality of first beam combining regions comprised in the first beam combining member (406);
performing beam combining on the received first sub-wavelength light beams by using the first beam combining regions to form second light beams (421, 422, 731, 741, 1231, 1241), and making a plurality of second light beams (421, 422, 731, 741, 1231, 1241) incident on the first lens group (408);
converging the plurality of second light beams (421, 422, 731, 741, 1231, 1241) to the second dispersion member (409) by using the first lens group (408), wherein the first lens group (408) comprises an odd quantity of lenses;
decomposing each second light beam (421, 422, 731, 741, 1231, 1241) into a plurality of second sub-wavelength light beams by using the second dispersion member (409), and making the plurality of second sub-wavelength light beams incident on the second switching engine (481, 1104);
changing, by using the second switching engine (481, 1104), transmission directions of the second sub-wavelength light beams for being incident on a plurality of second beam combining regions comprised in the second beam combining member (483), wherein the first switching engine (404, 1207) and the second switching engine (481, 1104) jointly change transmission directions of sub-wavelength light beams along a wavelength plane and a port plane, the wavelength plane and the port plane are perpendicular to each other, and both the wavelength plane and the port plane are parallel to transmission directions of the first light beams (411); and
performing beam combining on the received second sub-wavelength light beams by using the second beam combining regions to form third light beams (706, 1206, 1261), and transmitting the third light beams (706, 1206, 1261) to the output ports (621-623),
**characterized in that** the first dispersion member (402), the second dispersion member (409), the first beam combining member (406), and the second beam combining member (483) are a same grating, the first switching engine (404, 1207) and the second switching engine (481, 1104) are a same switching engine, the optical switching apparatus further comprises a switching and separation module, and after the obtaining first light beams (411) by using the input ports (611-614), the method further comprises:
receiving the first light beams (411) by using a first transmission region (902) of the switching and separation module, and transmitting the first light beams (411) to the first dispersion member (402) in a transmission manner;
receiving the second light beams (421, 422, 731, 741, 1231, 1241) by using a reflection region (901) of the switching and separation module, and transmitting the second light beams (421, 422, 731, 741, 1231, 1241) to the first lens group (408) in a reflection manner; and
receiving the third light beams (706, 1206, 1261) by using a second transmission region (903) of the switching and separation module, and transmitting the third light beams (706, 1206, 1261) to the output ports (621-623) in the transmission manner.

10. An optical switching node, comprising a plurality of optical switching apparatuses, wherein different optical switching apparatuses are connected through an optical fiber (1606), and the optical switching apparatuses are described according to any one of claims 1 to 8.

11. An optical communication system (1600), comprising a plurality of optical switching nodes according to claim 10.

## Patentansprüche

1. Optische Schaltvorrichtung, wobei die optische Schaltvorrichtung Eingangsanschlüsse (611-614), ein erstes Dispersionselement (402), eine erste Schaltmaschine (404, 1207), ein erstes Strahlenkombinierelement (406), eine erste Linsengruppe (408), ein zweites Dispersionselement (409), ein zweites Strahlenkombinierelement (483), eine zweite Schaltmaschine (481, 1104) und Ausgangsanschlüsse (621-623) umfasst, wobei die Eingangsanschlüsse (611-614) konfiguriert sind, um erste Lichtstrahlen (411) zu erhalten;
das erste Dispersionselement (402) konfiguriert ist, um die ersten Lichtstrahlen (411) von den Eingangsanschlüssen (611-614) zu empfangen, und konfiguriert ist, um die ersten Lichtstrahlen (411) in eine Vielzahl von ersten Subwellenlängen-Lichtstrahlen zu zerlegen, und wobei das erste Dispersionselement (402) ferner konfiguriert ist, um die Vielzahl von ersten Subwellenlängen-Lichtstrahlen auf die erste Schaltmaschine (404, 1207) einfallen zu lassen;
die erste Schaltmaschine (404, 1207) konfiguriert ist, um Übertragungsrichtungen der ersten Subwellenlängen-Lichtstrahlen zu ändern, damit diese auf eine Vielzahl von ersten Strahlenkombinierregionen einfallen, die in dem ersten Strahlenkombinierelement (406) umfasst sind;
die ersten Strahlenkombinierregionen konfiguriert sind, um eine Strahlenkombinierung an den empfangenen ersten Subwellenlängen-Lichtstrahlen durchzuführen, um zweite Lichtstrahlen (421, 422, 731, 741, 1231, 1241) auszubilden, und das erste Strahlenkombinierelement (406) konfiguriert ist, um eine Vielzahl von zweiten Lichtstrahlen (421, 422, 731, 741, 1231, 1241) auf die erste Linsengruppe (408) einfallen zu lassen;
die erste Linsengruppe (408) konfiguriert ist, um die Vielzahl von zweiten Lichtstrahlen (421, 422, 731, 741, 1231, 1241) auf das zweite Dispersionselement (409) zu konvergieren, wobei die erste Linsengruppe (408) eine ungerade Menge an Linsen umfasst;
das zweite Dispersionselement (409) konfiguriert ist, um jeden zweiten Lichtstrahl (421, 422, 731, 741, 1231, 1241) in eine Vielzahl von zweiten Subwellenlängen-Lichtstrahlen zu zerlegen, und das zweite Dispersionselement (409) konfiguriert ist, um die Vielzahl von zweiten Subwellenlängen-Lichtstrahlen auf die zweite Schaltmaschine (481, 1104) einfallen zu lassen;
die zweite Schaltmaschine (481, 1104) konfiguriert ist, um Übertragungsrichtungen der zweiten Subwellenlängen-Lichtstrahlen zu ändern, damit diese auf eine Vielzahl von zweiten Strahlenkombinierregionen einfallen, die in dem zweiten Strahlenkombinierelement (483) umfasst sind, wobei die erste Schaltmaschine (404, 1207) und die zweite Schaltmaschine (481, 1104) gemeinsam Übertragungsrichtungen von Subwellenlängen-Lichtstrahlen entlang einer Wellenlängenebene und einer Anschlussebene ändern, die Wellenlängenebene und die Anschlussebene senkrecht zueinander sind, und sowohl die Wellenlängenebene als auch die Anschlussebene parallel zu Übertragungsrichtungen der ersten Lichtstrahlen (411) sind; und
die zweiten Strahlenkombinierregionen konfiguriert ist, um die Strahlenkombinierung an den empfangenen zweiten Subwellenlängen-Lichtstrahlen durchzuführen, um dritte Lichtstrahlen (706, 1206, 1261) auszubilden, und das zweite Strahlenkombinierelement (483) konfiguriert ist, um die dritten Lichtstrahlen (706, 1206, 1261) an die Ausgangsanschlüsse (621-623) zu übertragen, **dadurch gekennzeichnet, dass**
das erste Dispersionselement (402), das zweite Dispersionselement (409), das erste Strahlenkombinierelement (406) und das zweite Strahlenkombinierelement (483) ein gleiches Gitter (701) sind,
die erste Schaltmaschine (404, 1207) und die zweite Schaltmaschine (481, 1104) eine gleiche Schaltmaschine (702) sind,
und die optische Schaltvorrichtung ferner ein Schalt- und Trennmodul (700) umfasst, wobei eine erste Übertragungsregion (902) des Schalt- und Trennmoduls konfiguriert ist, um die ersten Lichtstrahlen (411) zu empfangen, und konfiguriert ist, um die ersten Lichtstrahlen (411) an das erste Dispersionselement (402) in einer Übertragungsweise zu übertragen;
eine Reflexionsregion (901) des Schalt- und Trennmoduls konfiguriert ist, um die zweiten Lichtstrahlen (421, 422, 731, 741, 1231, 1241) zu empfangen, und konfiguriert ist, um die zweiten Lichtstrahlen (421, 422, 731, 741, 1231, 1241) an die erste Linsengruppe (408) in einer Reflexionsweise zu übertragen; und
eine zweite Übertragungsregion (903) des Schalt- und Trennmoduls konfiguriert ist, um die dritten Lichtstrahlen (706, 1206, 1261) zu empfangen, und konfiguriert ist, um die dritten Lichtstrahlen (706, 1206, 1261) an die Ausgangsanschlüsse (621-623) zu übertragen.

2. Optische Schaltvorrichtung nach Anspruch 1, wobei mindestens eine Linse, die in der ersten Linsengruppe (408) umfasst ist, konfiguriert ist, um die Vielzahl von zweiten Lichtstrahlen (421, 422, 731, 741, 1231, 1241) zu dem zweiten Dispersionselement (409) entlang der Wellenlängenebene und/oder der Anschlussebene zu konvergieren.

3. Optische Schaltvorrichtung nach Anspruch 1 oder 2, wobei ein Abstand zwischen dem Schalt- und Trennmodul, das in der optischen Schaltvorrichtung umfasst ist, und der ersten Linsengruppe (408) gleich einer äquivalenten Brennweite der ersten Linsengruppe (408) ist.

4. Optische Schaltvorrichtung nach einem der Ansprüche 1 bis 3, wobei die optische Schaltvorrichtung ein Eingangsanschluss-Array (400) und ein Ausgangsanschluss-Array (600) umfasst, das Eingangsanschluss-Array (400) eine Vielzahl von Eingangsanschlüssen (611-614) entlang jeweils einer ersten Richtung und einer dritten Richtung umfasst, das Ausgangsanschluss-Array (600) eine Vielzahl von Ausgangsanschlüssen (621-623) entlang jeweils der ersten Richtung und der dritten Richtung umfasst, sowohl die erste Richtung als auch die dritte Richtung senkrecht zu den Übertragungsrichtungen der ersten Lichtstrahlen (411) sind und die erste Richtung und die dritte Richtung senkrecht zueinander sind.

5. Optische Schaltvorrichtung nach einem der Ansprüche 1 bis 4, wobei die optische Schaltvorrichtung eine erste Menge an Ausgangsanschlüssen (621-623) entlang der ersten Richtung umfasst, die optische Schaltvorrichtung eine zweite Menge an Ausgangsanschlüssen (621-623) entlang der dritten Richtung umfasst, und sowohl die erste Richtung als auch die dritte Richtung senkrecht zu den Übertragungsrichtungen der ersten Lichtstrahlen (411) sind;
eine Menge an ersten Strahlenkombinierregionen, die in dem ersten Strahlenkombinierelement (406) entlang der ersten Richtung umfasst sind, kleiner als oder gleich der ersten Menge ist, und eine Menge an ersten Strahlenkombinierregionen, die in dem ersten Strahlenkombinierelement (406) entlang der dritten Richtung umfasst sind, kleiner als oder gleich der zweiten Menge ist; und eine Menge an zweiten Strahlenkombinierregionen, die in dem zweiten Strahlenkombinierelement (483) entlang der ersten Richtung umfasst sind, kleiner als oder gleich der ersten Menge ist, und eine Menge an zweiten Strahlenkombinierregionen, die in dem zweiten Strahlenkombinierelement (483) entlang der dritten Richtung umfasst sind, kleiner als oder gleich der zweiten Menge ist.

6. Optische Schaltvorrichtung nach einem der Ansprüche 1 bis 5, wobei die optische Schaltvorrichtung eine Vielzahl von Eingangsanschlüssen (611-614) umfasst, eine zweite Linsengruppe (403) ferner zwischen der Vielzahl von Eingangsanschlüssen (611-614) und dem ersten Dispersionselement (402) umfasst ist und die zweite Linsengruppe (403) eine ungerade Menge an Linsen umfasst, wobei die zweite Linsengruppe (403) konfiguriert ist, um eine Vielzahl von ersten Lichtstrahlen (411) auf eine erste Region und eine zweite Region des Dispersionselements (402) mit unterschiedlichen Einfallwinkeln einfallen zu lassen.

7. Optische Schaltvorrichtung nach Anspruch 6, wobei sich die erste Region und die zweite Region auf dem ersten Dispersionselement (402) überlappen.

8. Optische Schaltvorrichtung nach einem der Ansprüche 1 bis 7, wobei das erste Dispersionselement (402) konfiguriert ist, um unterschiedliche erste Subwellenlängen-Lichtstrahlen mit unterschiedlichen Emissionswinkeln zu emittieren.

9. Optisches Schaltverfahren, das auf eine optische Schaltvorrichtung angewendet wird, wobei die optische Schaltvorrichtung Eingangsanschlüsse (611-614), ein erstes Dispersionselement (402), eine erste Schaltmaschine (404, 1207), ein erstes Strahlenkombinierelement (406), eine erste Linsengruppe (408), ein zweites Dispersionselement (409), ein zweites Strahlenkombinierelement (483), eine zweite Schaltmaschine (481, 1104) und Ausgangsanschlüsse (621-623) umfasst, und das Verfahren umfasst:
Erhalten erster Lichtstrahlen (411) durch Verwenden der Eingangsanschlüsse (611-614);
Empfangen der ersten Lichtstrahlen (411) von den Eingangsanschlüssen (611-614) durch Verwenden des ersten Dispersionselements (402), Zerlegen der ersten Lichtstrahlen (411) in eine Vielzahl von ersten Subwellenlängen-Lichtstrahlen und Veranlassen der Vielzahl von ersten Subwellenlängen-Lichtstrahlen auf die erste Schaltmaschine (404, 1207) einzufallen;
Ändern, durch Verwenden der ersten Schaltmaschine (404, 1207), von Übertragungsrichtungen der ersten Subwellenlängen-Lichtstrahlen, damit diese auf eine Vielzahl von ersten Strahlenkombinierregionen einfallen, die in dem ersten Strahlenkombinierelement (406) umfasst sind;
Durchführen einer Strahlenkombinierung an den empfangenen ersten Subwellenlängen-Lichtstrahlen durch Verwenden der ersten Strahlenkombinierregionen, um zweite Lichtstrahlen (421, 422, 731, 741, 1231, 1241) auszubilden, und Veranlassen einer Vielzahl von zweiten Lichtstrahlen (421, 422, 731, 741, 1231, 1241) auf die erste Linsengruppe (408) einzufallen;
Konvergieren der Vielzahl von zweiten Lichtstrahlen (421, 422, 731, 741, 1231, 1241) auf das zweite Dispersionselement (409) durch Verwenden der ersten Linsengruppe (408), wobei die erste Linsengruppe (408) eine ungerade Menge an Linsen umfasst;
Zerlegen jedes zweiten Lichtstrahls (421, 422, 731, 741, 1231, 1241) in eine Vielzahl von zweiten Subwellenlängen-Lichtstrahlen durch Verwenden des zweiten Dispersionselements (409) und Veranlassen der Vielzahl von zweiten Subwellenlängen-Lichtstrahlen auf die zweite Schaltmaschine (481, 1104) einzufallen;
Ändern, durch Verwenden der zweiten Schaltmaschine (481, 1104), von Übertragungsrichtungen der zweiten Subwellenlängen-Lichtstrahlen, damit diese auf eine Vielzahl von zweiten Strahlenkombinierregionen einfallen, die in dem zweiten Strahlenkombinierelement (483) umfasst sind; wobei die erste Schaltmaschine (404, 1207) und die zweite Schaltmaschine (481, 1104) gemeinsam Übertragungsrichtungen von Subwellenlängen-Lichtstrahlen entlang einer Wellenlängenebene und einer Anschlussebene ändern, die Wellenlängenebene und die Anschlussebene senkrecht zueinander sind und sowohl die Wellenlängenebene als auch die Anschlussebene parallel zu Übertragungsrichtungen der ersten Lichtstrahlen (411) sind; und
Durchführen der Strahlenkombinierung an den empfangenen zweiten Subwellenlängen-Lichtstrahlen durch Verwenden der zweiten Strahlenkombinierregionen, um dritte Lichtstrahlen (706, 1206, 1261) auszubilden, und Übertragen der dritten Lichtstrahlen (706, 1206, 1261) an die Ausgangsanschlüsse (621-623),
**dadurch gekennzeichnet, dass**
das erste Dispersionselement (402), das zweite Dispersionselement (409), das erste Strahlenkombinierelement (406) und das zweite Strahlenkombinierelement (483) ein gleiches Gitter sind, die erste Schaltmaschine (404, 1207) und die zweite Schaltmaschine (481, 1104) eine gleiche Schaltmaschine sind, die optische Schaltvorrichtung ferner ein Schalt- und Trennmodul umfasst, und nach dem Erhalten erster Lichtstrahlen (411) durch Verwenden der Eingangsanschlüsse (611-614) das Verfahren ferner umfasst:
Empfangen der ersten Lichtstrahlen (411) durch Verwenden einer ersten Übertragungsregion (902) des Schalt- und Trennmoduls, und Übertragen der ersten Lichtstrahlen (411) an das erste Dispersionselement (402) in einer Übertragungsweise;
Empfangen von zweiten Lichtstrahlen (421, 422, 731, 741, 1231, 1241) durch Verwenden einer Reflexionsregion (901) des Schalt- und Trennmoduls und Übertragen der zweiten Lichtstrahlen (421, 422, 731, 741, 1231, 1241) an die erste Linsengruppe (408) in einer Reflexionsweise; und
Empfangen der dritten Lichtstrahlen (706, 1206, 1261) durch Verwenden einer zweiten Übertragungsregion (903) des Schalt- und Trennmoduls und Übertragen der dritten Lichtstrahlen (706, 1206, 1261)
an die Ausgangsanschlüsse (621-623) in der Übertragungsweise.

10. Optischer Schaltknoten, der eine Vielzahl optischer Schaltvorrichtungen umfasst, wobei unterschiedliche optische Schaltvorrichtungen über eine optische Faser (1606) verbunden sind und die optischen Schaltvorrichtungen nach einem der Ansprüche 1 bis 8 beschrieben sind.

11. Optisches Kommunikationssystem (1600), das eine Vielzahl von optischen Schaltknoten nach Anspruch 10 umfasst.

## Revendications

1. Appareil de commutation optique, dans lequel l'appareil de commutation optique comprend des ports d'entrée (611-614), un premier élément de dispersion (402), un premier moteur de commutation (404, 1207), un premier élément de combinaison de faisceaux (406), un premier groupe de lentilles (408), un second élément de dispersion (409), un second élément de combinaison de faisceaux (483), un second moteur de commutation (481, 1104), et des ports de sortie (621-623), dans lequel les ports d'entrée (611-614) sont configurés pour obtenir des premiers faisceaux lumineux (411) ;
le premier élément de dispersion (402) est configuré pour recevoir les premiers faisceaux lumineux (411) à partir des ports d'entrée (611-614), et est configuré pour décomposer les premiers faisceaux lumineux (411) en une pluralité de premiers faisceaux lumineux de sous-longueur d'onde, et le premier élément de dispersion (402) est en outre configuré pour que la pluralité de premiers faisceaux lumineux de sous-longueur d'onde soient incidents sur le premier moteur de commutation (404, 1207) ;
le premier moteur de commutation (404, 1207) est configuré pour modifier des directions de transmission des premiers faisceaux lumineux de sous-longueur d'onde pour qu'ils soient incidents sur une pluralité de premières régions de combinaison de faisceaux comprises dans le premier élément de combinaison de faisceaux (406) ; les premières régions de combinaison de faisceaux sont configurées pour effectuer une combinaison de faisceaux sur les premiers faisceaux lumineux de sous-longueur d'onde reçus afin de former des deuxièmes faisceaux lumineux (421, 422, 731, 741, 1231, 1241), et le premier élément de combinaison de faisceaux (406) est configuré pour qu'une pluralité de deuxièmes faisceaux lumineux (421, 422, 731, 741, 1231, 1241) soient incidents sur le premier groupe de lentilles (408) ;
le premier groupe de lentilles (408) est configuré pour faire converger la pluralité de deuxièmes faisceaux lumineux (421, 422, 731, 741, 1231, 1241) vers le second élément de dispersion (409), dans lequel le premier groupe de lentilles (408) comprend une quantité impaire de lentilles ;
le second élément de dispersion (409) est configuré pour décomposer chaque deuxième faisceau lumineux (421, 422, 731, 741, 1231, 1241) en une pluralité de deuxièmes faisceaux lumineux de sous-longueur d'onde, et le second élément de dispersion (409) est configuré pour que la pluralité de deuxièmes faisceaux lumineux de sous-longueur d'onde soient incidents sur le second moteur de commutation (481, 1104) ;
le second moteur de commutation (481, 1104) est configuré pour changer des directions de transmission des deuxièmes faisceaux lumineux de sous-longueur d'onde pour qu'ils soient incidents sur une pluralité de secondes régions de combinaison de faisceaux comprises dans le second élément de combinaison de faisceaux (483), dans lequel le premier moteur de commutation (404, 1207) et le second moteur de commutation (481, 1104) modifient conjointement des directions de transmission des faisceaux lumineux de sous-longueur d'onde le long d'un plan de longueur d'onde et d'un plan de port, le plan de longueur d'onde et le plan de port sont perpendiculaires l'un à l'autre, et le plan de longueur d'onde et le plan de port sont tous deux parallèles à des directions de transmission des premiers faisceaux lumineux (411) ; et
les secondes régions de combinaison de faisceaux sont configurées pour effectuer une combinaison de faisceaux sur les deuxièmes faisceaux lumineux de sous-longueur d'onde reçus afin de former des troisièmes faisceaux lumineux (706, 1206, 1261), et le second élément de combinaison de faisceaux (483) est configuré pour transmettre les troisièmes faisceaux lumineux (706, 1206, 1261) aux ports de sortie (621-623),
**caractérisé en ce que**
le premier élément de dispersion (402), le second élément de dispersion (409), le premier élément de combinaison de faisceaux (406), et le second élément de combinaison de faisceaux (483) constituent un même réseau (701),
le premier moteur de commutation (404, 1207) et le second moteur de commutation (481, 1104) constituent un même moteur de commutation (702),
et l'appareil de commutation optique comprend en outre un module de commutation et de séparation (700), dans lequel
une première région de transmission (902) du module de commutation et de séparation est configurée pour recevoir les premiers faisceaux lumineux (411), et est configurée pour transmettre les premiers faisceaux lumineux (411) au premier élément de dispersion (402) par voie de transmission ;
une région de réflexion (901) du module de commutation et de séparation est configurée pour recevoir les deuxièmes faisceaux lumineux (421, 422, 731, 741, 1231, 1241), et est configurée pour transmettre les deuxièmes faisceaux lumineux (421, 422, 731, 741, 1231, 1241) au premier groupe de lentilles (408) par voie de réflexion ; et
une seconde région de transmission (903) du module de commutation et de séparation est configurée pour recevoir les troisièmes faisceaux lumineux (706, 1206, 1261), et est configurée pour transmettre les troisièmes faisceaux lumineux (706, 1206, 1261) aux ports de sortie (621-623) par la voie de transmission.

2. Appareil de commutation optique selon la revendication 1, dans lequel au moins une lentille comprise dans le premier groupe de lentilles (408) est conçue pour faire converger la pluralité de deuxièmes faisceaux lumineux (421, 422, 731, 741, 1231, 1241) vers le second élément de dispersion (409) le long du plan de longueur d'onde et/ou du plan de port.

3. Appareil de commutation optique selon la revendication 1 ou 2, dans lequel une distance entre le module de commutation et de séparation compris dans l'appareil de commutation optique et le premier groupe de lentilles (408) est égale à une longueur focale équivalente du premier groupe de lentilles (408).

4. Appareil de commutation optique selon l'une quelconque des revendications 1 à 3, dans lequel l'appareil de commutation optique comprend un réseau de ports d'entrée (400) et un réseau de ports de sortie (600), le réseau de ports d'entrée (400) comprend une pluralité de ports d'entrée (611-614) le long de chacune d'une première direction et d'une troisième direction, le réseau de ports de sortie (600) comprend une pluralité de ports de sortie (621-623) le long de chacune de la première direction et de la troisième direction, la première direction et la troisième direction sont toutes deux perpendiculaires aux directions de transmission des premiers faisceaux lumineux (411), et la première direction et la troisième direction sont perpendiculaires l'une à l'autre.

5. Appareil de commutation optique selon l'une quelconque des revendications 1 à 4, dans lequel l'appareil de commutation optique comprend une première quantité de ports de sortie (621-623) le long de la première direction, l'appareil de commutation optique comprend une seconde quantité de ports de sortie (621-623) le long de la troisième direction, et la première direction et la troisième direction sont toutes deux perpendiculaires aux directions de transmission des premiers faisceaux lumineux (411) ;
une quantité de premières régions de combinaison de faisceaux comprises dans le premier élément de combinaison de faisceaux (406) le long de la première direction est inférieure ou égale à la première quantité, et une quantité de premières régions de combinaison de faisceaux comprises dans le premier élément de combinaison de faisceaux (406) le long de la troisième direction est inférieure ou égale à la seconde quantité ; et
une quantité de secondes régions de combinaison de faisceaux comprises dans le second élément de combinaison de faisceaux (483) le long de la première direction est inférieure ou égale à la première quantité, et une quantité de secondes régions de combinaison de faisceaux comprises dans le second élément de combinaison de faisceaux (483) le long de la troisième direction est inférieure ou égale à la seconde quantité.

6. Appareil de commutation optique selon l'une quelconque des revendications 1 à 5, dans lequel l'appareil de commutation optique comprend une pluralité de ports d'entrée (611-614), un second groupe de lentilles (403) est également compris entre la pluralité de ports d'entrée (611-614) et le premier élément de dispersion (402), et le second groupe de lentilles (403) comprend une quantité impaire de lentilles, dans lequel
le second groupe de lentilles (403) est configuré pour qu'une pluralité de premiers faisceaux lumineux (411) soient incidents sur une première région et une seconde région du premier élément de dispersion (402) à différents angles d'incidence.

7. Appareil de commutation optique selon la revendication 6, dans lequel la première région et la seconde région se chevauchent sur le premier élément de dispersion (402).

8. Appareil de commutation optique selon l'une quelconque des revendications 1 à 7, dans lequel le premier élément de dispersion (402) est configuré pour émettre différents premiers faisceaux lumineux de sous-longueur d'onde à différents angles d'émission.

9. Procédé de commutation optique, appliqué à un appareil de commutation optique, dans lequel l'appareil de commutation optique comprend des ports d'entrée (611-614), un premier élément de dispersion (402), un premier moteur de commutation (404, 1207), un premier élément de combinaison de faisceaux (406), un premier groupe de lentilles (408), un second élément de dispersion (409), un second élément de combinaison de faisceaux (483), un second moteur de commutation (481, 1104), et des ports de sortie (621-623), et le procédé comprend :
l'obtention de premiers faisceaux lumineux (411) en utilisant les ports d'entrée (611-614) ;
la réception des premiers faisceaux lumineux (411) à partir des ports d'entrée (611-614) en utilisant le premier élément de dispersion (402), la décomposition des premiers faisceaux lumineux (411) en une pluralité de premiers faisceaux lumineux de sous-longueur d'onde, et le fait de rendre la pluralité de premiers faisceaux lumineux de sous-longueur d'onde incidents sur le premier moteur de commutation (404, 1207) ;
la modification, en utilisant le premier moteur de commutation (404, 1207), de directions de transmission des premiers faisceaux lumineux de sous-longueur d'onde pour qu'ils soient incidents sur une pluralité de premières régions de combinaison de faisceaux comprises dans le premier élément de combinaison de faisceaux (406) ;
la réalisation d'une combinaison de faisceaux sur les premiers faisceaux lumineux de sous-longueur d'onde reçus en utilisant les premières régions de combinaison de faisceaux afin de former des deuxièmes faisceaux lumineux (421, 422, 731, 741, 1231, 1241), et le fait de rendre une pluralité de deuxièmes faisceaux lumineux (421, 422, 731, 741, 1231, 1241) incidents sur le premier groupe de lentilles (408) ;
la convergence de la pluralité de deuxièmes faisceaux lumineux (421, 422, 731, 741, 1231, 1241) vers le second élément de dispersion (409) en utilisant le premier groupe de lentilles (408), dans lequel le premier groupe de lentilles (408) comprend une quantité impaire de lentilles ;
la décomposition de chaque deuxième faisceau lumineux (421, 422, 731, 741, 1231, 1241) en une pluralité de deuxièmes faisceaux lumineux de sous-longueur d'onde en utilisant le second élément de dispersion (409), et le fait de rendre la pluralité de deuxièmes faisceaux lumineux de sous-longueur d'onde incidents sur le second moteur de commutation (481, 1104) ;
la modification, en utilisant le second moteur de commutation (481, 1104), de directions de transmission des deuxièmes faisceaux lumineux de sous-longueur d'onde pour qu'ils soient incidents sur une pluralité de secondes régions de combinaison de faisceaux comprises dans le second élément de combinaison de faisceaux (483), dans lequel le premier moteur de commutation (404, 1207) et le second moteur de commutation (481, 1104) modifient conjointement des directions de transmission des faisceaux lumineux de sous-longueur d'onde le long d'un plan de longueur d'onde et d'un plan de port, le plan de longueur d'onde et le plan de port sont perpendiculaires l'un à l'autre, et le plan de longueur d'onde et le plan de port sont tous deux parallèles à des directions de transmission des premiers faisceaux lumineux (411) ; et
la réalisation d'une combinaison de faisceaux sur les deuxièmes faisceaux lumineux de sous-longueur d'onde reçus en utilisant les secondes régions de combinaison de faisceaux afin de former des troisièmes faisceaux lumineux (706, 1206, 1261), et la transmission des troisièmes faisceaux lumineux (706, 1206, 1261) aux ports de sortie (621-623),
**caractérisé en ce que**
le premier élément de dispersion (402), le second élément de dispersion (409), le premier élément de combinaison de faisceaux (406), et le second élément de combinaison de faisceaux (483) constituent un même réseau, le premier moteur de commutation (404, 1207) et le second moteur de commutation (481, 1104) constituent un même moteur de commutation, l'appareil de commutation optique comprend en outre un module de commutation et de séparation, et après l'obtention de premiers faisceaux lumineux (411) en utilisant les ports d'entrée (611-614), le procédé comprend en outre :
la réception des premiers faisceaux lumineux (411) en utilisant une première région de transmission (902) du module de commutation et de séparation, et la transmission des premiers faisceaux lumineux (411) au premier élément de dispersion (402) par voie de transmission ;
la réception des deuxièmes faisceaux lumineux (421, 422, 731, 741, 1231, 1241) en utilisant une région de réflexion (901) du module de commutation et de séparation, et la transmission des deuxièmes faisceaux lumineux (421, 422, 731, 741, 1231, 1241) au premier groupe de lentilles (408) par voie de réflexion ; et
la réception des troisièmes faisceaux lumineux (706, 1206, 1261) en utilisant une seconde région de transmission (903) du module de commutation et de séparation, et la transmission des troisièmes faisceaux lumineux (706, 1206, 1261) aux ports de sortie (621-623) par la voie de transmission.

10. Nœud de commutation optique, comprenant une pluralité d'appareils de commutation optique, dans lequel différents appareils de commutation optique sont connectés par une fibre optique (1606), et les appareils de commutation optique sont décrits selon l'une quelconque des revendications 1 à 8.

11. Système de communication optique (1600), comprenant une pluralité de nœuds de commutation optique selon la revendication 10.
